(19) Europäisches Patentamt
European Patent Office
Office européen des brevets

(11) EP 3 885 134 A1

(12) **EUROPEAN PATENT APPLICATION**
published in accordance with Art. 153(4) EPC

(43) Date of publication:
**29.09.2021 Bulletin 2021/39**

(21) Application number: **19886129.6**

(22) Date of filing: **19.11.2019**

(51) Int Cl.:
***B32B 27/00*** *(2006.01)* ***B05D 5/00*** *(2006.01)*
***B05D 7/04*** *(2006.01)* ***B05D 7/24*** *(2006.01)*
***C09D 5/16*** *(2006.01)* ***C09D 7/63*** *(2018.01)*
***C09D 7/65*** *(2018.01)* ***C09D 183/04*** *(2006.01)*
***C09J 7/29*** *(2018.01)* ***C09J 7/38*** *(2018.01)*

(86) International application number:
**PCT/JP2019/045260**

(87) International publication number:
**WO 2020/105630 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2018 JP 2018216655**

(71) Applicant: **Chugoku Marine Paints, Ltd.**
**Hiroshima 739-0652 (JP)**

(72) Inventors:
- **TANINO, Soichiro**
  **Otake-shi, Hiroshima 739-0652 (JP)**
- **NAKATANI, Keisuke**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(54) **ANTIFOULING COATING FILM WITH COVER FILM, METHOD FOR PRODUCING SAME, ANTIFOULING TAPE, AND METHOD FOR PRODUCING STRUCTURE WHICH HAS ANTIFOULING COATING FILM AND IS IN CONTACT WITH WATER**

(57) The present invention provides an antifouling coating film with a cover film that contains a cover film (x) formed of a cover film forming composition (X) and an antifouling coating film (y) formed of an antifouling coating composition (Y), wherein the cover film forming composition (X) contains an unsaturated carbonyl compound (A) having one or more $\alpha,\beta$-unsaturated carbonyl groups in one molecule, the antifouling coating composition (Y) contains a curable organopolysiloxane (B), and the cover film (x) is provided on one surface of the antifouling coating film (y), and also provides a method for producing the antifouling coating film, an antifouling tape, and a method for producing a water-contacting structure with the antifouling coating film. The cover film has good adhesiveness to the organopolysiloxane-based antifouling coating film and has excellent removability in contact with water.

EP 3 885 134 A1

## Description

Technical Field

The present invention relates to an antifouling coating film with a cover film and a method for producing the same, and to an antifouling tape and a method for producing a water-contacting structure with an antifouling coating film.

Background Art

A surface (water-contacting surface) of a structure that is brought into contact with water, i.e., a water-contacting structure, such as a ship, a fishing gear, and a water pipe, is exposed to a risk of economic losses due to appearance deterioration and increase of water flow resistance caused by attachment of aquatic organisms. The measure that has been generally employed for preventing the attachment of aquatic organisms is to cover the surface of the water-contacting structure with an antifouling coating film having a function of preventing or reducing the attachment of aquatic organisms. One example of such an antifouling coating film is a coating film to be formed using a curable organopolysiloxane as a binder.

Recently, a method of forming such an organopolysiloxane-based antifouling coating film by attaching to a surface of a water-contacting structure has been proposed. For example, PTL 1 discloses a self-adhering multilayer antifouling coating film structure, and PTL 2 discloses a method of using a sheet having an antifouling layer on the surface thereof.

On the other hand, a technique of imparting a function of preventing adhesion of aquatic organisms or a function of reducing a frictional resistance is being investigated by forming a microstructure in the surface of a coating film to over a surface of a water-contacting structure. In particular, in ships and pipelines, there is a high demand for the function of reducing a frictional resistance from the standpoint of energy saving. As a surface structure of a typical coating film capable of imparting such a function, there is known a so-called riblet structure. As examples of a coating film that uses a riblet structure, PTL 3 discloses a method for constructing a ship hull that includes a step of feeding and curing a curable resin layer such as a room temperature-vulcanizing silicone rubber in a mold, and PTL 4 discloses a specific riblet transfer sheet.

Citation List

Patent Literature

PTL 1: JP 2018-510084 A
PTL 2: JP 2016-124994 A
PTL 3: JP 1-222908 A
PTL 4: JP 2018-27510 A

Summary of Invention

Technical Problem

In the above-mentioned method of attaching an organopolysiloxane-based antifouling coating film, the organopolysiloxane-based antifouling film may be damaged by scratching, breaking or chipping in a step of storing, transporting or attaching after formation of the organopolysiloxane-based antifouling film. In particular, an organopolysiloxane-based antifouling film is required to have flexibility for exhibiting the antifouling property thereof, and is often vulnerable to damages. Consequently, the antifouling property lowers in the damaged part of the film, and the value thereof is decreased greatly, and it is important to protect the film from being damaged. One example of a method of protecting from damages is a method of covering the surface of an antifouling coating film with a cover film.

Regarding an antifouling coating film with a cover film that is produced by tightly attaching a cover film to the surface of an organopolysiloxane-based antifouling coating film, the organopolysiloxane-based antifouling coating film can be protected from being damaged by a process of removing the cover film from the antifouling film after the antifouling film has been adhered to a target object such as a water-contacting structure via storage and transportation thereof.

However, the present inventors' investigations have revealed a new problem that the cover film heretofore have been used in the above-mentioned method is poorly adhesive to the organopolysiloxane-based antifouling coating film and therefore the cover film often peels away before completion of the process of attaching it to a target object, that is,

the cover film could not fulfill the intrinsic protective function.

The cover film of the type is further required to have a function that can be readily removed from the antifouling coating film after the antifouling coating film with the cover film has been adhered to a target object, but at present, a cover film capable of satisfying such a demand is not found as yet.

The present invention has been made to solve the problem, and an object thereof is to provide an organopolysiloxane-based antifouling coating film with a cover film that has good adhesiveness between the cover film and the antifouling coating film and is excellent in cover film removability in contact with water, and a method for producing the same, and to provide an antifouling tape and a method for producing a water-contacting structure with an antifouling coating film.

Solution to Problem

As a result of the earnest studies on the problem, the present inventors have found that, in an organopolysiloxane-based antifouling coating film with a cover film formed of a specific cover film forming composition (X) and a specific antifouling coating composition (Y), the adhesiveness between the antifouling coating film and the cover film is improved, and the cover film has excellent removability in contact with water, and thus have completed the present invention.

The present invention relates to the following [1] to [11].

[1] An antifouling coating film with a cover film that contains a cover film (x) formed from a cover film forming composition (X) and an antifouling coating film (y) formed from an antifouling coating composition (Y), wherein:

the cover film forming composition (X) contains an unsaturated carbonyl compound (A) having one or more $\alpha,\beta$-unsaturated carbonyl groups in one molecule,
the antifouling coating composition (Y) contains a curable organopolysiloxane (B), and
the cover film (x) is provided on one surface of the antifouling coating film (y).

[2] The antifouling coating film with a cover film according to [1], wherein the unsaturated carbonyl compound (A) contains at least one compound selected from the group consisting of a polyfunctional unsaturated carbonyl compound (A1) and a monofunctional unsaturated carbonyl compound (A2).
[3] The antifouling coating film with a cover film according to [1] of [2], wherein the unsaturated carbonyl compound (A) has at least one selected from the group consisting of a hydroxy group, a carboxy group, an amino group, an amide group, and an alkyleneoxy group.
[4] The antifouling coating film with a cover film according to any one of [1] to [3], wherein the antifouling coating composition (Y) further contains a silane coupling agent (F).
[5] The antifouling coating film with a cover film according to any one of [1] to [4], wherein the antifouling coating composition (Y) further contains an aquatic organisms slip agent (G).
[6] The antifouling coating film with a cover film according to [5], wherein the aquatic organisms slip agent (G) contains one or more selected from the group consisting of a silicone oil (G1) and a hydrophilic group-containing polymer (G2).
[7] The antifouling coating film with a cover film according to any one of [1] to [6], wherein the cover film (x) has a substrate sheet for cover film on the surface opposite to the surface thereof that is in contact with the antifouling coating film (y).
[8] The antifouling coating film with a cover film according to any one of [1] to [7], wherein the surface of the cover film (x) and the antifouling coating film that are in contact with each other has a riblet surface structure.
[9] A method for producing the antifouling coating film with a cover film of any one of [1] to [8], including a step of applying the antifouling coating composition (Y) onto the cover film (x).
[10] An antifouling tape having the antifouling coating film with a cover film of any one of [1] to [8] and a pressure-sensitive adhesive layer (v), wherein:
the pressure-sensitive adhesive layer (v) is on the surface opposite to the surface of the antifouling coating film (y) that is in contact with the cover film (x), optionally via an intermediate layer (w).
[11] A method for producing a water-contacting structure with an antifouling coating film, including a step 1 of arranging and fixing the antifouling coating film with a cover film of any one of [1] to [8] or the antifouling tape of [10] on at least a part of a surface of a water-contacting structure in such a manner that the cover film (x) can be on the water-contacting surface side and that the antifouling coating film (y) can be on the water-contacting structure side, and a step 2 of removing the cover film (x) from the antifouling coating film (y) by contact with water.

Advantageous Effects of Invention

According to the present invention, there can be provided an organopolysiloxane-based antifouling coating film with a cover film that has good adhesiveness between the cover film and the antifouling coating film and is excellent in cover film removability in contact with water, and a method for producing the same, and an antifouling tape and a method for producing a water-contacting structure with an antifouling coating film.

Description of Embodiments

The antifouling coating film with a cover film and the method for producing the same, and the antifouling tape and the method for producing a water-contacting structure with an antifouling coating film of the present invention will be described below in detail.

[Antifouling Coating Film with Cover Film]

The antifouling coating film with a cover film of the present invention contains a cover film (x) formed from a cover film forming composition (X) and an antifouling coating film (y) formed from an antifouling coating composition (Y), wherein the cover film (x) is provided on one surface of the antifouling coating film (y).

According to the present invention, there can be provided an antifouling coating film with a cover film excellent in adhesiveness between the cover film (x) and the antifouling coating film (y). The antifouling coating film with a cover film of the present invention can reduce a risk of peeling the cover film (x) from the antifouling coating film (y) and eventually can reduce a risk of giving a damage to the antifouling coating film during the completion of the above-mentioned process of attaching the antifouling coating film to a target object such as a water-contacting structure via storage and transportation thereof.

In addition, since the adhesiveness between the cover film (x) and the antifouling coating film (y) is high, a component that may lower adhesiveness such as an aquatic organisms slip agent can be blended in the antifouling coating composition (Y) with no specific limitation.

Further, in the present invention, the cover film has excellent film removability in contact with water. Here, "removability in contact with water" means a function that, when an antifouling coating film with a cover film adhered to a target object such as a water-contacting structure is brought into contact with water, the cover film (x) is removed from the antifouling coating film, and the removing method is not specifically limited.

[Cover Film Forming Composition (X)]

Hereinunder the components that constitute the cover film forming composition (X) in the present invention are described.

<Unsaturated Carbonyl Compound (A)>

The cover film forming composition (X) in the present invention contains an unsaturated carbonyl compound (A) having one or more $\alpha,\beta$-unsaturated carbonyl groups in one molecule (hereinunder the compound may be simply referred to as "unsaturated carbonyl compound (A)").

Since the cover film forming composition (X) in the present invention contains the unsaturated carbonyl compound (A), good adhesiveness to be given between the cover film (x) and the antifouling coating film (y). While the detailed mechanism is not necessarily clear, a part thereof can be presumed to be because of the interaction occurring between the carbonyl group contained in the cover film (x) and the organopolysiloxane in the antifouling coating film (y).

The unsaturated carbonyl compound (A) has one or more $\alpha,\beta$-unsaturated carbonyl groups in one molecule. The $\alpha,\beta$-unsaturated carbonyl group means a functional group that has a double bond between the $\alpha$-carbon and the $\beta$-carbon relative to the carbonyl group.

The unsaturated carbonyl compound (A) preferably contains at least one selected from the group consisting of a polyfunctional unsaturated carbonyl compound (A1) having 2 or more $\alpha,\beta$-unsaturated carbonyl groups in one molecule, and a monofunctional unsaturated carbonyl compound (A2) having one $\alpha,\beta$-unsaturated carbonyl group in one molecule. More specifically, from the standpoint of bettering the film properties of the cover film (x) and further bettering the adhesiveness between the cover film (x) and the antifouling coating film (y), the polyfunctional unsaturated carbonyl compound (A1) is contained preferably, while from the standpoint of lowering the viscosity of the cover film forming composition (X) and from the standpoint of increasing the removability of the cover film (x) in contact with water, the monofunctional unsaturated carbonyl compound (A2) is contained preferably.

The ratio of the polyfunctional unsaturated carbonyl compound (A1) to the monofunctional unsaturated carbonyl compound (A2) in the unsaturated carbonyl compound (A) can be appropriately controlled depending on the necessary properties of the cover film (x).

For example, in the case of forming a cover film excellent in film properties such as bending resistance, preferably, the ratio of the polyfunctional unsaturated carbonyl compound (A1) in the unsaturated carbonyl compound (A) is 1 to 100% by mass, more preferably 10 to 100% by mass.

On the other hand, in the case of forming a cover film having an increased solubility in water in contact with water thereby to have improved removability in contact with water, preferably, the ratio of the monofunctional unsaturated carbonyl compound (A2) in the unsaturated carbonyl compound (A) is 90 to 100% by mass, more preferably 99 to 100% by mass.

The $\alpha,\beta$-unsaturated carbonyl group in the unsaturated carbonyl compound (A) includes a (meth)acryloyl group, and from the standpoint of reactivity, an acryloyl group is preferably contained. Compounds having such a functional group include a (meth)acrylate compound and a (meth)acrylamide compound, and from the standpoint of reducing the viscosity of the cover film forming composition (X) and from the standpoint of stability of the compound, a (meth)acrylate compound is preferred.

The (meth)acryloyl group-having compound in the monofunctional unsaturated carbonyl compound (A2) is, from the standpoint of bettering the adhesiveness between the cover film (x) and the antifouling coating film (y), preferably a (meth)acrylamide compound, more preferably an N,N-di-substituted acrylamide compound.

In this description, "(meth)acrylate" is an expression to mean "acrylate or methacrylate", and "(meth)acryloyl group" is to mean "acryloyl group or methacryloyl group", and the same shall apply to the other similar expressions.

From the standpoint of bettering the adhesiveness between the cover film (x) and the antifouling coating film (y) and from the standpoint of excellent removability of the cover film (x) in contact with water, the unsaturated carbonyl compound (A) preferably has at least one selected from the group consisting of a hydroxy group, a carboxy group, an amino group, an amide group and an alkyleneoxy group, more preferably at least one selected from the group consisting of a hydroxy group, a carboxy group, an amide group and an alkyleneoxy group, even more preferably at least one selected from the group consisting of a carboxy group, an amide group and an alkyleneoxy group, and further more preferably a carboxy group. In the case where the unsaturated carbonyl compound (A) has the above-mentioned group, the number of the groups may be one or more in one molecule.

Preferably, the polyfunctional unsaturated carbonyl compound (A1) is a compound having an alkyleneoxy group.

Preferably, the monofunctional unsaturated carbonyl compound (A2) is a compound having at least one selected from the group consisting of a hydroxy group, a carboxy group, an amino group and an amide group, more preferably a compound having at least one selected from the group consisting of a carboxy group and an amide group.

In the case where the cover film forming composition (X) contains a carboxy group-having compound as the unsaturated carbonyl group (A), the content thereof is, from the standpoint of bettering the adhesiveness between the cover film (x) and the antifouling coating film (y) and from the standpoint of excellent removability in contact with water of the cover film (x), preferably such that the acid value of the cover film forming composition (X) can be 10 to 800 mgKOH/g, more preferably 100 to 780 mgKOH/g, even more preferably 200 to 750 mgKOH/g.

In the case where the cover film forming composition (X) contains a hydroxy group-having compound as the unsaturated carbonyl compound (A), the content thereof is, from the same standpoints as above, preferably such that the hydroxyl value of the cover film forming composition (X) can be 10 to 500 mgKOH/g, more preferably 100 to 500 mgKOH/g, even more preferably 200 to 500 mgKOH/g.

In the case where the cover film forming composition (X) contains an amino group-having compound as the unsaturated carbonyl compound (A), the content thereof is, from the same standpoints as above, preferably such that the amine value of the cover film forming composition (X) can be 10 to 500 mgKOH/g, more preferably 100 to 500 mgKOH/g, even more preferably 200 to 500 mgKOH/g.

The acid value is defined as the amount (mg) of potassium hydroxide (KOH) necessary for neutralizing 1 g of a target component, and is expressed as a unit of mgKOH/g, and this is a numerical value widely used for expressing the acid group content in a target substance.

The acid value of the cover film forming composition (X) can be determined according to the method of JIS K 5601-2-1:1999.

The hydroxyl value is defined as the amount (mg) of potassium hydroxide (KOH) necessary for neutralizing acetic acid for use in acetylation of 1 g of a target component, and is expressed as a unit of mgKOH/g, and this is a numerical value widely used for expressing the hydroxy group content in a target substance.

The hydroxyl value of the cover film forming composition (X) can be determined according to the method of JIS K 0070:1992.

The amine value is defined as the amount (mg) of potassium hydroxide (KOH) necessary for neutralizing perchloric acid for use in neutralization of 1 g of a target component, and is expressed as a unit of mgKOH/g, and this is a numerical value widely used for expressing the amino group content in a target substance.

The amine value of the cover film forming composition (X) can be determined by hydroxyl value measurement according to the method of JIS K 7237:1995.

The acid value, the hydroxyl value and the amine value of the cover film forming composition (X) can be

estimated from analytical data of a formed cover film (x). Similarly, for these values, reference may be made to the theoretical values calculated from the charged amount of the unsaturated carbonyl compound (A) contained in the cover film forming composition (X).

Of the monofunctional unsaturated carbonyl compound (A2), the carboxy group-having compound includes acrylic acid, β-carboxyethyl acrylate (for example, "B-CEA" by Daicel-Allnex Ltd.), 2-acryloyloxyethylhexahydrophthalic acid (for example, "Light Acrylate HOA-HH(N)" by Kyoeisha Chemical Co., Ltd.), methacrylic acid and crotonic acid, and especially from the standpoint of polymerizability, acrylic acid, β-carboxyethyl acrylate and 2-acryloyloxyethylhexahydrophthalic acid are preferred, and further from the standpoint of removability in contact with water, acrylic acid is more preferred.

Of the monofunctional unsaturated carbonyl compound (A2), the hydroxy group-having compound includes 2-hydroxyethyl acrylate (for example, "Light Acrylate HOA(N)" by Kyoeisha Chemical Co., Ltd.), 2-hydroxypropyl acrylate (for example, "HPA" by Osaka Organic Chemical Industry Ltd.), 2-hydroxybutyl acrylate (for example, "Light Acrylate HOB-A" by Kyoeisha Chemical Co., Ltd.), 4-hydroxybutyl acrylate (for example, "4-HBA" by Osaka Organic Chemical Industry Ltd.), and 2-hydroxyethylacrylamide (for example, "HEAA" by KJ Chemicals Corporation), and especially from the standpoint of safety in handling, and from the standpoint of the strength and the removability in contact with water of the formed cover film (x), 2-hydroxyethylacrylamide is preferred.

Of the monofunctional unsaturated carbonyl compound (A2), the amino group-having compound includes N,N-dimethylaminoethyl acrylate, N,N-diethylaminoethyl acrylate, acrylamide, aminomethyl acrylate, aminoethyl acrylate, N-[3-(dimethylamino)propyl]acrylamide (for example, "DMAPAA" by KJ Chemicals Corporation).

Of the monofunctional unsaturated carbonyl compound (A2), the amide group-having compound is preferably a compound having an acrylamide structure, including N,N-dimethylacrylamide (for example, "DMAA" by KJ Chemicals Corporation)., N,N-diethylacrylamide (for example, "DEAA" KJ Chemicals Corporation), and 4-acryloylmorpholine (for example, "ACMO" KJ Chemicals Corporation). Among these, from the standpoint of safety in handling and polymerizability, and from the standpoint of the strength of the cover film (x), 4-acryloylmorpholine is preferred. In this description, a compound having an amide group and a hydroxy group, and a compound having an amide group and an amino group are exemplified as a hydroxy group-having compound and an amino group-having compound, respectively, and these also correspond to an amide group-having compound.

In the case where the unsaturated carbonyl compound (A) is an alkyleneoxy group-having compound, the alkyleneoxy group therein is preferably an ethyleneoxy group.

In the case where the cover film forming composition (X) contains an unsaturated carbonyl compound (A) having an alkyleneoxy group, the proportion of the partial structure of the alkyleneoxy group in the cover film (x) is preferably 1 to 90% by mass from the standpoint of excellent removability in contact with water, more preferably 5 to 80% by mass.

The proportion of the partial structure of the alkyleneoxy group indicates a proportion by mass of the partial structure of the alkyleneoxy group to the total mass of the cover film forming composition (X), and can be calculated through analysis such as NMR (nuclear magnetic resonance).

Of the polyfunctional unsaturated carbonyl compound (A1), the alkyleneoxy group-having compound includes ethoxylated (4) pentaerythritol tetraacrylate (for example, "Sartomer SR494" by Sartomer Corporation, average molecular weight 528, Tg 2°C), and ethoxylated (15) trimethylolpropane triacrylate (for example, "Sartomer SR9035" by Sartomer Corporation, average molecular weight 956, Tg -32°C).

Of the monofunctional unsaturated carbonyl compound (A2), the alkyleneoxy group-having compound includes 2-methoxyethyl acrylate, 2-methoxyethyl methacrylate, methoxytriethylene glycol acrylate (for example, "Biscoat #MTG" by Osaka Organic Chemical Industry Ltd.), and methoxypolyethylene glycol acrylate (for example, "NK Ester AM-90G" by Shin-Nakamura Chemical Co., Ltd. (average repetition number of ethylene glycols 9)).

Among these, from the standpoint of bettering the film properties of the cover film (x) and further bettering the adhesiveness between the cover film (x) and the antifouling coating film (y), the polyfunctional unsaturated carbonyl compound (A1) is preferred for the alkyleneoxy group-having compound.

The unsaturated carbonyl compound (A) can contain a compound not having a hydroxy group, a carboxy group, an amino group, an amide group and an alkyleneoxy group such as those mentioned above, for the purpose of controlling the film properties of the cover film (x) to be formed and controlling the viscosity of the cover film forming composition (X). Of those compounds, the polyfunctional unsaturated carbonyl compound (A1) includes 1,6-hexanediol diacrylate (for example, "Light Acrylate 1.6HX-A" by Kyoeisha Chemical Co., Ltd.); and the monofunctional unsaturated compound (A2) includes ethyl acrylate, butyl acrylate, 2-ethylhexyl acrylate, lauryl acrylate and isobornyl acrylate.

Also preferably, the unsaturated carbonyl compound (A) contains a urethane structure in the structure thereof from the standpoint of bettering the film properties of the cover film (x) and from the standpoint of bettering the adhesiveness between the cover film (x) and the antifouling coating film (y). Especially preferably, the polyfunctional unsaturated carbonyl compound (A1) contains a urethane structure in the structure thereof.

The unsaturated carbonyl compound (A) containing a urethane structure can be prepared, for example, from

a reaction product of a compound having 2 or more isocyanate groups in one molecule, a polyol compound, and a compound having an $\alpha,\beta$-unsaturated carbonyl group and a hydroxy group.

Examples of the compound having 2 or more isocyanate groups in one molecule include a low-molecular-weight polyisocyanate compound such as isophorone diisocyanate, hexamethylene diisocyanate and xylylene diisocyanate; and an isocyanate group-containing urethane oligomer that is a reaction product of a polyol compound and a low-molecular-weight polyisocyanate compound.

The polyol compound includes ethylene glycol, propylene glycol, 1,4-butanediol, neopentyl glycol, glycerin and trimethylolpropane.

Also preferably, the unsaturated carbonyl compound (A) having a urethane structure of the type has an alkyleneoxy group such as that mentioned above, from the standpoint of bettering the adhesiveness between the cover film (x) and the antifouling coating film (y) and from the standpoint of removability in contact with water. For example, using a polyether polyol compound as the polyol compound, an alkyleneoxy group can be introduced. The polyether polyol compound includes polyethylene glycol, polypropylene glycol, and polytetramethylene glycol.

One alone or two or more kinds of unsaturated carbonyl compounds (A) can be used either singly or as combined.

The content of the unsaturated carbonyl compound (A) in the solid content of the cover film forming composition (X) is, from the standpoint of the adhesiveness between the cover film (x) and the antifouling coating film (y) and from the standpoint of the film properties of the cover film (x), preferably 1 to 99% by mass, more preferably 50 to 98% by mass.

Preferably, the cover film forming composition (X) in the present invention is an energy-curable composition that can be cured by irradiation with energy rays. In the case where the cover film forming composition (X) is an energy ray-curable composition, preferably, the composition further contains a polymerization initiator (C).

<Polymerization Initiator (C)>

The polymerization initiator (C) is not specifically limited, and preferably, a known photopolymerization initiator is used.

The photopolymerization initiator is not specifically limited so far as it can generate radicals through photoirradiation, and examples thereof include an alkylphenone-based initiator, an acylphosphine oxide-based initiator, and a hydrogen abstraction-type initiator.

Examples of the alkylphenone-based initiator include 2,2-dimethoxy-1,2-diphenylethan-1-one, 1-hydroxycyclohexyl phenyl ketone, methyl phenylglyoxylate, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-{4-[4-(2-hydroxy-2-methyl-propionyl)-benzyl]phenyl}-2-mehtyl-1-prop an- 1-one, 2-methyl-1-(4-methylthiophenyl)-2-morpholinopropan-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-but anone.

Examples of the acylphosphine oxide-based initiator include diphenyl(2,4,6-trimethylbenzoyl)phosphine oxide, and Phenylbis(2,4,6-trimethylbenzoyl)phosphine oxide.

Examples of the hydrogen abstraction-type initiator include benzophenone, 2,4,6-trimethylbenzophenone, methyl benzoylbenzoate, 2,4-diethylthioxanthone, 2-ethylanthraquinone, and camphorquinone.

Among these, 1-hydroxycyclohexyl phenyl ketone, and diphenyl(2,4,6-trimethylbenzoyl)phosphine oxide are preferred.

One alone or two or more kinds of polymerization initiators (C) can be used either singly or as combined.

The content of the polymerization initiator (C) in the cover film forming composition (X) is preferably 0.1 to 20 parts by mass relative to 100 parts by mass of the unsaturated carbonyl compound (A).

<Optional Components in Cover Film Forming Composition (X)>

As needed, the cover film forming composition (X) may contain any other component than the above-mentioned components. The other component includes a polymerization inhibitor (D), an antifoaming agent (E), an organic solvent (H), a viscosity regulator (O), a UV absorbent and hindered amine-based light stabilizer, a surface improver, a non-reactive diluent, a delustering agent, an antisettling agent, a dispersant, and a heat stabilizer.

The polymerization inhibitor (D) includes hydroquinone, p-benzoquinone, t-butylhydroquinone, pyrogallol, 4-t-butylcatechol, and p-methoxyphenol.

The antifoaming agent (E) includes a silicone-based antifoaming agent, a polyether-based antifoaming agent, and a fatty acid ester-based antifoaming agent.

The organic solvent (H) includes those exemplified hereinunder as an organic solvent (H) for the antifouling coating composition (Y) to be mentioned below.

The viscosity regulator (O) includes a fatty acid amide, an organic bentonite, and a fine powder silica.

Not specifically limited, the blending amount of the optional component can be appropriately varied within a

range not detracting from the advantageous effects of the present embodiment.

[Cover Film (x)]

The cover film (x) is formed of the cover film forming composition (X), and specifically, the film can be formed by applying the cover film forming composition (X) on a substrate and then drying and/or curing the composition thereon.
The thickness of the cover film (x) is not specifically limited so far as it can protect an antifouling coating film, but from the standpoint of achieving a high-level balance of curability, weather resistance, scratch resistance and hardness, the thickness is preferably 2 to 300 pm, more preferably 10 to 200 pm.
The substrate includes a release sheet or a substrate sheet for cover film to be mentioned below.
The coating method with the cover film forming composition (X) can be appropriately selected depending on the formulation of the cover film forming composition and on the type and the shape of the substrate, and examples thereof include a spray coating method, a dip coating method, an air knife coating method, a curtain coating method, a roller coating method, a wire bar coating method, a gravure coating method, and an extrusion coating method.
As the curing method for the cover film forming composition (X), employable is a method of irradiating the cover film forming composition (X) applied on a substrate, with light such as UV rays (active energy rays or radiations).
The active energy rays for curing the cover film forming composition (X) include, in addition to light rays such as far-UV rays, UV rays, near-UV rays and IR rays, electromagnetic waves such as X rays and Y rays, as well as electron rays, proton rays and neutron rays. Above all, from the standpoint of curing speed, and availability and cost of irradiation devices, UV rays are preferred.
As the method for curing with UV rays, employable is a method of irradiation at a dose of 100 to 3,000 $mJ/cm^2$, using a high-pressure mercury lamp, a metal halide lamp, a xenon lamp, a chemical lamp or an electrodeless lamp that can emit light falling within a wavelength range of 200 to 500 nm.
For shortening the time for drying and curing, the cover film forming composition (X) can be dried and/or cured under heat at 5 to 120°C or so.

<Substrate Sheet for Cover Film>

The cover film (x) may be one produced by applying the cover film forming composition (X) on one surface of a substrate sheet for cover film, and drying and/or curing it thereon.
In the case where a substrate sheet for cover film is used, the antifouling coating film with a cover film of the present invention has the substrate sheet for cover film on the surface of the cover film (x) opposite to the surface thereof that is in contact with the antifouling coating film (y). Having the configuration where a substrate sheet for cover film and the cover film (x) are layered in that order, the strength of the cover film (x) can be enhanced, and the cover film (x) and also the antifouling coating film with a cover film and the antifouling tape of the present invention can be produced with ease, and the antifouling coating film with a cover film can be readily adhered to a water-contacting structure.
The resin to constitute the substrate sheet for cover film includes polyvinyl alcohol (PVA), polyethylene terephthalate (PET), polypropylene (PP), and polyvinyl chloride (PVC).
Preferably, the resin to constitute the substrate sheet for cover film is one having appropriate strength, flexibility, heat resistance and solvent resistance, and from this standpoint, PET and PP are preferred, and PET is more preferred.
On the other hand, the substrate sheet for cover film is, from the standpoint of removability in contact with water, preferably one having water permeability or water swellability or water solubility. A sheet having such water solubility includes PVA.
For securing water permeability, a film such as PET with low water swellability or water solubility may be given pores.
Not specifically limited, the thickness of the substrate sheet for cover film is preferably 10 to 200 pm.
In particular, in the case where the proportion of the polyfunctional unsaturated carbonyl compound (A1) in the unsaturated carbonyl compound (A) to be contained in the cover film forming composition (X) is low, for example, in the case where the proportion of the polyfunctional unsaturated carbonyl compound (A1) in the unsaturated carbonyl compound (A) is less than 20% by mass (preferably 10% by mass or less), a substrate sheet for cover film of that type is preferably used.

<Cover Film Having Riblet Surface Structure>

A cover film having a riblet surface structure can be used as the cover film (x). A cover film having a riblet surface structure can be produced, for example, according to a method of using a template (cover film forming template) having a riblet surface structure to transfer the surface profile thereof to the surface of the cover film (x) to be produced.
For example, the method includes a step of applying a cover film forming composition (X) onto a substrate

sheet for cover film or onto a release surface and pressing a riblet surface structure-having template to the coated surface during or after drying and/or curing, or a step of applying a cover film forming composition (X) onto the riblet surface of the template, and drying and/or curing it, followed by removing the template from the surface of the cover film (x) after any of the previous steps.

In the case where the method is employed, a riblet surface structure can be readily formed on the surface of the cover film (x) by appropriately selecting the material of the template, or by appropriately controlling the timing of pressing the template and the timing of removing the template.

For the purpose of initiating or accelerating the curing reaction for the cover film forming composition (X), heating or photoirradiation may be carried out during pressing the template or after coating the riblet surface of the template. After the cover film forming composition (X) is cured to give a cover film (x), the template may be pressed optionally with heating to transfer the surface profile thereof.

Not specifically limited, the material of the cover film forming template is preferably one having good releasability from the cured cover film, and examples thereof include a silicone resin. In the case where the cover film is cured by photoirradiation with UV rays that penetrate the template during curing, preferably, the template has UV permeability. In the case where the cover film is dried and cured by heating, preferably, the template has heat resistance. In the case where a surface profile is transferred by pressing to the cover film (x) formed after curing, preferably, the template has a sufficient hardness.

The shape of the cover film forming template is not specifically limited, and may be flat or curved, and when the template is cylindrical, it is suitable to line production.

[Antifouling Coating Composition (Y)]

Hereinunder constituent components of the antifouling coating composition (Y) for use in the present invention (hereinafter this may be simply referred to as "coating composition") are described.

<Curable Organopolysiloxane (B)>

The antifouling coating composition (Y) contains a curable organopolysiloxane (B) for the purpose of enhancing the antifouling property of the antifouling coating film. One alone or two or more kinds of curable organopolysiloxanes can be used either singly or as combined.

Examples of the curable organopolysiloxane (B) include ones that are cured by forming a three-dimensional crosslinked structure through the reaction among the reactive groups contained in the molecule thereof or the reaction between the reactive group contained therein and the reactive group of the organosilicon crosslinking agent (J) described later. Examples of the reaction of the reactive group include condensation reaction and addition reaction, and examples of the condensation reaction include dealcoholization reaction, deoximation reaction, and deacetonation reaction.

The curable organopolysiloxane (B) having a reactive group in the molecule is preferably one that forms silicone rubber in curing, and for example, a compound represented by the following formula (B1) is preferred

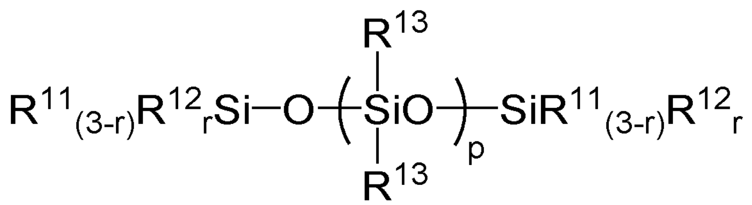

( B1 )

In the formula (B1), $R^{11}$ and $R^{13}$ each independently represent a hydrogen atom, an alkyl group having 1 to 16 carbon atoms, an alkenyl group having 2 to 16 carbon atoms, an aryl group having 6 to 16 carbon atoms, an aralkyl group having 7 to 16 carbon atoms, or a halogenated alkyl group having 1 to 16 carbon atoms; $R^{12}$ each independently represent a hydroxy group or a hydrolyzable group; r represents an integer of 1 to 3; and p represents 10 to 10,000.

The alkyl group having 1 to 16 carbon atoms represented by $R^{11}$ and $R^{13}$ may be linear or branched, and examples thereof include a methyl group, an ethyl group, a propyl group, a butyl group, a pentyl group, a hexyl group, a heptyl group, an octyl group, a decyl group, a dodecyl group, and a hexadecyl group.

The alkenyl group having 2 to 16 carbon atoms represented by $R^{11}$ and $R^{13}$ may be linear, branched, or cyclic, and examples thereof include a vinyl group, an allyl group, a propenyl group, an isopropenyl group, a butenyl group, an isobutenyl group, a pentenyl group, a heptenyl group, a hexenyl group, a cyclohexenyl group, an octenyl group, a decenyl group, and a dodecenyl group.

The aryl group having 6 to 16 carbon atoms represented by $R^{11}$ and $R^{13}$ may have a substituent such as an

alkyl group on the aromatic ring, and examples thereof include a phenyl group, a tolyl group (i.e., a methylphenyl group), a xylyl group (i.e., a dimethylphenyl group), and a naphthyl group.

Examples of the aralkyl group having 7 to 16 carbon atoms represented by $R^{11}$ and $R^{13}$ include a benzyl group, a 2-phenylethyl group, a 2-naphthylethyl group, and a diphenylmethyl group.

Examples of the halogenated alkyl group having 1 to 16 carbon atoms represented by $R^{11}$ and $R^{13}$ include the groups exemplified above for the alkyl group, in which the hydrogen atoms thereof are partially or completely substituted by a halogen atom, such as a fluorine atom, a chlorine atom, a bromine atom, and an iodine atom.

Among these, $R^{11}$ in the formula (B1) preferably represents a hydrogen atom, the alkyl group, the alkenyl group, or the aryl group, more preferably a methyl group, an ethyl group, a vinyl group, or a phenyl group, and further preferably a methyl group or a vinyl group.

$R^{13}$ in the formula (B1) preferably represents a hydrogen atom, the alkyl group, the alkenyl group, or the aryl group, more preferably a methyl group, an ethyl group, a vinyl group, or a phenyl group, further preferably a methyl group, an ethyl group, or a phenyl group, and still further preferably a methyl group or a phenyl group.

The plural groups represented by $R^{13}$ may be the same as or different from each other. In the case where there are plural groups represented by $R^{11}$, the groups may be the same as or different from each other.

Examples of the hydrolyzable group represented by $R^{12}$ include an oxime group, an acyloxy group, an alkoxy group, an alkenyloxy group, an amino group, an amide group, and an aminooxy group.

The oxime group represented by $R^{12}$ is preferably an oxime group having 1 to 10 carbon atoms, and examples thereof include a dimethyl ketoxime group, a methyl ethyl ketoxime group, a diethyl ketoxime group, and a methyl isopropyl ketoxime group.

The acyloxy group (RC(=O)O-) represented by $R^{12}$ is preferably an aliphatic acyloxy group having 1 to 10 carbon atoms or an aromatic acyloxy group having 7 to 12 carbon atoms, and examples thereof include an acetoxy group, a propionyloxy group, a butyryloxy group, and a benzoyloxy group.

The alkoxy group represented by $R^{12}$ is preferably an alkoxy group having 1 to 10 carbon atoms. In the alkoxy group represented by $R^{12}$, an ether group (-O-) may intervene between the carbon-carbon bonds of the alkyl chain.

Specific examples of the alkoxy group represented by $R^{12}$ include a methoxy group, an ethoxy group, a propoxy group, a butoxy group, a methoxyethoxy group, and an ethoxyethoxy group.

The alkenyloxy group represented by $R^{12}$ is preferably an alkenyloxy group having 3 to 10 carbon atoms, and examples thereof include an isopropenyloxy group, an isobutenyloxy group, and a 1-ethyl-2-methylvinyloxy group.

The amino group represented by $R^{12}$ may be any of a primary amino group, a secondary amino group, and a tertiary amino group, and among these, a secondary amino group and a tertiary amino group are preferred, and an amino group having 1 to 10 carbon atoms is more preferred. Examples of the preferred amino group include an N-methylamino group, an N-ethylamino group, an N-propylamino group, an N-butylamino group, an N,N-dimethylamino group, an N,N-diethylamino group, and an N-cyclohexylamino group.

In the description herein, the primary amino group means a group represented by $-NH_2$, the secondary amino group means a group obtained by substituting one hydrogen atom of $-NH_2$ with an alkyl group or the like, and the tertiary amino group means a group obtained by substituting two hydrogen atoms of $-NH_2$ with an alkyl group or the like.

The amide group represented by $R^{12}$ is preferably an amide group having 2 to 10 carbon atoms, and examples thereof include an N-methylacetamide group, an N-ethylacetamide group, and an N-methylbenzamide group.

The aminooxy group represented by $R^{12}$ is preferably an aminooxy group having 2 to 10 carbon atoms, and examples thereof include an N,N-dimethylaminooxy group and an N,N-diethylaminooxy group.

Among these, $R^{12}$ in the formula (B1) preferably represents a hydroxy group, an oxime group, or an alkoxy group, more preferably a hydroxy group or an oxime group, and further preferably a hydroxy group or a methyl ethyl ketoxime group.

The plural groups represented by $R^{12}$ may be the same as or different from each other.

In the case where the $R^{12}$ in the formula (B1) is a hydroxy group, r preferably represents 1, and in the case where $R^{12}$ is a substituent other than a hydroxy group, r preferably represents 2.

In the formula (B1), p represents 10 to 10,000, and preferably 100 to 1,000, and may be appropriately controlled to satisfy the following weight average molecular weight.

p means the average repetition number of $-(SiR^{13}{}_2-O)-$.

As the curable organopolysiloxane (B), for example, addition-curable ones such as those described in WO2016/88630 can be used, and UV-curable ones such as those described in JP 2016-203039 A can be used.

The weight average molecular weight (Mw) of the curable organopolysiloxane (B) is preferably 500 or more, more preferably 5,000 or more, further preferably 10,000 or more, still further preferably 15,000 or more, and still more further preferably 20,000 or more, and is preferably 1,000,000 or less, more preferably 100,000 or less, further preferably 50,000 or less, and still further preferably 40,000 or less, from the standpoint of the enhancement of the workability in the production of the coating composition, and the standpoint of the enhancement of the spraying atomization property and the curability of the coating composition and the strength of the formed coating film.

In the present invention, the "weight average molecular weight (Mw)" of the curable organopolysiloxane (B), the polymer (G2) containing a constituent unit derived from the hydrophilic group-containing unsaturated monomer described later, and the like is obtained by measuring by GPC (gel permeation chromatography) and calculating by conversion with the standard polystyrene having known molecular weights.

The viscosity at 23°C of the curable organopolysiloxane (B) is preferably 20 mPa·s or more, more preferably 100 mPa·s or more, and further preferably 500 mPa·s or more, and is preferably 100,000 mPa·s or less, more preferably 10,000 mPa·s or less, and further preferably 5,000 mPa·s or less, from the standpoint of the enhancement of the workability in the production of the coating composition, and the standpoint of the enhancement of the spraying atomization property and the curability of the coating composition and the strength of the formed coating film.

In the description herein, the viscosity at 23°C of the curable organopolysiloxane means a viscosity measured with a B-type rotary viscometer (for example, Model BM, manufactured by Tokyo Keiki, Inc.).

The content of the curable organopolysiloxane (B) in the antifouling coating composition (Y) is preferably 10 to 90% by mass, more preferably 20 to 80% by mass, even more preferably 30 to 70% by mass, from the standpoint of the enhancement of the strength of the formed coating film.

The content of the curable organopolysiloxane in the solid content of the antifouling coating composition (Y) is preferably 15 to 95% by mass, more preferably 25 to 85% by mass, even more preferably 35 to 75% by mass.

In the description herein, the "solid content" means the component except for the organic solvent (H) described later and the volatile components contained in the components as a solvent in the composition, and for example, the "content in the solid content of the coating composition" can be calculated as a content in a solid content obtained by drying the coating composition in a hot air dryer at 125°C for 1 hour.

<Optional Components of Antifouling Coating Composition (Y)>

The antifouling coating composition (Y) may contain, in addition to the curable organopolysiloxane (B), a silane coupling agent (F), an aquatic organisms slip agent (G), an organic solvent (H), an inorganic filler (I), an organosilicon crosslinking agent (J), a curing catalyst (K), a coloring pigment (L), an organisms repellent (M), an anti-sagging and anti-settling agent (N), an enzyme, a dehydrating agent, a flame retardant and a thermal conductivity improver, depending on necessity.

[Silane Coupling Agent (F)]

The antifouling coating composition (Y) may contain a silane coupling agent (F) for the purpose of improving he adhesiveness between the antifouling coating film (y) and the cover film (x) and the adhesiveness between the antifouling coating film (y) and the underlying material.

For example, the silane coupling agent (F) to be used here is preferably a compound represented by the following formula (F1).

$$(R^{21}O)_wR^{22}_{(3-w)}Si\text{-}R^{23}\text{-}Z \qquad (F1)$$

In the formula (FI), $R^{21}$ and $R^{22}$ each independently represent a monovalent hydrocarbon group having 1 to 10 carbon atoms, $R^{23}$ represents a divalent hydrocarbon group having 1 to 20 carbon atoms and optionally intervened by a hetero atom-having group, Z represents a polar group, and w represents an integer of 1, 2 or 3.

The monovalent hydrocarbon group having 1 to 10 carbon atoms represented by $R^{21}$ includes an alkyl group having 1 to 10 carbon atoms. The monovalent hydrocarbon group having 1 to 10 carbon atoms represented by $R^{22}$ includes an alkyl group having 1 to 10 carbon atoms, an alkenyl group having 2 to 10 carbon atoms, and an aryl group having 6 to 10 carbon atoms.

The alkyl group having 1 to 10 carbon atoms represented by $R^{21}$ and $R^{22}$, and the alkenyl group having 2 to 10 carbon atoms and the aryl group having 6 to 10 carbon atoms represented by $R^{22}$ include those having the corresponding carbon number among the exemplifications for $R^{11}$ and $R^{13}$ in the general formula (B1) mentioned hereinabove.

In the present invention, "hydrocarbon group" means a group composed of carbon and hydrogen unless otherwise specifically indicated, and includes a saturated or unsaturated, linear or branched aliphatic group, an alicyclic group and an aromatic group.

$R^{21}$ is preferably a methyl group, an ethyl group, a propyl group or a butyl group, and more preferably a methyl group.

$R^{22}$ is preferably a methyl group, an ethyl group, a propyl group, a butyl group or a phenyl group, more preferably a methyl group, an ethyl group, a propyl group or a butyl group, and even more preferably a methyl group. In the case where there are plural groups represented by $R^{21}$ and $R^{22}$, the groups may be the same as or different from each other.

The divalent hydrocarbon group having 1 to 20 carbon atoms represented by $R^{23}$ includes a linear or branched

alkylene group having 1 to 20 carbon atoms. The linear alkylene group includes a methylene group, an ethylene group, a trimethylene group, a tetramethylene group, a hexamethylene group, an octamethylene group, a decamethylene group, a dodecamethylene group, a tetradecamethylene group, a hexadecamethylene group, an octadecamethylene group, and an eicosylene group. The branched alkylene group includes a propylene group, an isopropylene group, an isobutylene group, a 2-methyltrimethylene group, an isopentylene group, an isohexylene group, an isooctylene group, a 2-ethylhexylene group, and an isodecylene group.

Among these, an alkylene group having 3 to 11 carbon atoms is preferred, and a linear alkylene group having 3 to 11 carbon atoms is more preferred.

The hetero atom-having group includes an $-NR^a-$ group ($R^a$ represents a hydrogen atom or a monovalent hydrocarbon group having 1 to 10 carbon atoms), an ether group (-O-), a thioether group (-S-), an ester group (-C(=O)-O-), and an amide group ($-C(=O)-NR^b-$, where $R^b$ represents a hydrogen atom or a monovalent hydrocarbon group having 1 to 10 carbon atoms). Among these, an $-NR^a-$ group is preferred, and an -NH- group is more preferred. $R^{23}$ may contain one or more hetero atom-having groups, and in the case where there are plural hetero atom-having groups, the groups may be the same as or different from each other.

Z in the formula (F1) represents a polar group. The polar group is preferably an amin group, an iminoalkyl group ($-CR^c=NH$, where $R^c$ represents a hydrogen atom or a monovalent hydrocarbon group having 1 to 10 carbon atoms), a glycidoxy group, an isocyanate group, a thiol group, a hydrosilyl group, or a (meth)acryloyloxy group, more preferably an amino group. The amino group of Z in the formula (F1) may be any of a primary amino group, a secondary amino group or a tertiary amino group, and is especially preferably a primary amino group.

w in the formula (F1) is an integer of 1, 2 or 3, and is preferably 2 or 3, more preferably 3.

Examples of the silane coupling agent (F) include 3-(2-aminoethylamino)propyltrimethoxysilane, 3-aminopropyltrimethoxysilane, 3 - aminopropylriethoxysilane, 3-(2-(2-aminoethylamino)ethylamino)propyltrimethoxysilane, 3-glycidoxpropyltrimethoxysilane, 3-isocyanatepropyltrimethoxysilane, 3-mercaptopropyltrimethoxysilane, and N-phenyl-3-aminopropyltrimethoxysilane.

As the silane coupling agent (F), a hydrolyzed partial condensate of the compound represented by the general formula (F1) is also usable. One alone or two or more kinds of silane coupling agents (F) can be used either singly or as combined.

In the case where the antifouling coating composition (Y) contains a silane coupling agent (F), the content of the silane coupling agent (F) in the solid content of the antifouling coating composition is, from the standpoint of enhancing the adhesiveness between the antifouling coating film (y) and the cover film (x) and the adhesiveness between the antifouling coating film (y) and the substrate or the underlying coating film, preferably 0.01 to 10% by mass, more preferably 0.05 to 2% by mass.

[Aquatic Organisms Slip Agent (G)]

The antifouling coating composition (Y) may contain an aquatic organisms slip agent (G) (hereinafter this may be simply referred to as "slip agent (G)").

The slip agent (G) is liquid at 23°C and exudes to the surface of the antifouling coating film to impart slip property to the antifouling coating film, thereby preventing aquatic organisms from adhering to the antifouling coating film.

The slip agent (G) of the type preferably contains one or more selected from the group consisting of a silicone oil (G1) and a polymer (G2) that contains a constituent unit derived from a hydrophilic group-containing unsaturated monomer, from the standpoint of bettering the antifouling property of the antifouling coating film. One alone or two or more kinds of these slip agents (G) can be used either singly or as combined.

[Silicone Oil (G1)]

The silicone oil (G1) is an oil containing polyorganosiloxane in the polymer main chain, and a silicone oil represented by the following formula (G1) is preferred.

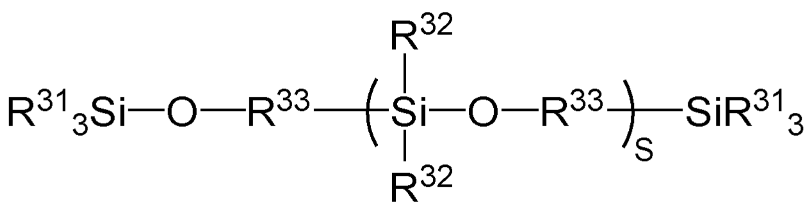

( G1 )

In the formula (G1), $R^{31}$ and $R^{32}$ each independently represent a hydrogen atom, or an alkyl group, an alkenyl

group, an aryl group, an aralkyl group, or a halogenated alkyl group, each of which has 1 to 50 carbon atoms, and may contain a group having a hetero atom in the structure thereof; $R^{33}$ represents a single bond, or a divalent hydrocarbon group having 1 to 50 carbon atoms, which may have intervening therein a group having a hetero atom; and s represents an integer of 10 to 1,000.

In the case where $R^{31}$ and $R^{32}$ each represent an alkyl group, an alkenyl group, an aryl group, an aralkyl group, or a halogenated alkyl group, each of which have 1 to 50 carbon atoms, these groups each independently may be a group containing a group having a hetero atom in the structure thereof.

Examples of the group having a hetero atom include an amino group, a hydroxy group, a carboxy group, a thiol group, and a group having a hetero atom as exemplified hereinabove for $R^{23}$ in the formula (F1). The group having a hetero atom in the structure includes, for example, in the case of an alkyl group, those having a structure intervened by a hetero atom-having group in the carbon-carbon bond of the alkyl group, and those derived from an alkyl group by substituting the hydrogen atom of the alkyl group with a hetero atom-having group. One alone or two or more kinds of hetero atom-having groups may be contained, and in the case where there are plural hetero atom-having groups, the groups may be the same as or different from each other.

The plural groups represented by $R^{31}$ and $R^{32}$ may be the same as or different from each other.

The silicone oil (G1) is preferably a silicone oil, in which $R^{31}$ and $R^{32}$ are constituted only by an alkyl group, or constituted by an alkyl group and an aryl group.

The silicone oil (G1), in which $R^{31}$ and $R^{32}$ are constituted only by an alkyl group, is preferably a silicone oil, in which the plural groups represented by $R^{31}$ and $R^{32}$ are all constituted by methyl groups, or a silicon oil, in which the groups are constituted by a methyl group and an alkyl group other than a methyl group, and more preferably a silicon oil, in which the groups are all constituted by methyl groups, or a silicon oil, in which the groups are constituted by a methyl group and an alkyl group having an ether group.

In the following description, the silicon oil (G1), in which the plural groups represented by $R^{31}$ and $R^{32}$ are all constituted by methyl groups, may be referred to as a "polydimethylsiloxane (unmodified)".

Examples of the alkyl group having an ether group include a group having the following chemical structure.

$$-R^{34}(C_2H_4O)_a(C_3H_6O)_bR^{35}$$

wherein $R^{34}$ represents an alkylene group having 1 to 20 carbon atoms; $R^{35}$ represents an alkyl group having 1 to 20 carbon atoms; and a and b each independently represent an integer of 0 to 30, provided that a+b is an integer of 1 or more.

In the following description, the silicone oil (G1), in which $R^{31}$ and $R^{32}$ are constituted by a methyl group and an alkyl group having an ether group, may be referred to as an "ether-modified polydimethylsiloxane".

The silicone oil (G1), in which $R^{31}$ and $R^{32}$ are constituted by an alkyl group and an aryl group, is preferably a silicone oil, in which $R^{31}$ and $R^{32}$ are constituted by a methyl group and a phenyl group, and more preferably a silicone oil having a ratio of a phenyl group occupied in all $R^{31}$ and $R^{32}$ (i.e., a phenyl modification rate) of 3 to 50%.

In the following description, the silicone oil (G1), in which $R^{31}$ and $R^{32}$ are constituted by a methyl group and a phenyl group, may be referred to as a "phenyl-modified polydimethylsiloxane".

In the formula (G1), $R^{33}$ represents a single bond, or a divalent hydrocarbon group having 1 to 50 carbon atoms, which may have intervening therein a group having a hetero atom. Regarding examples of the divalent hydrocarbon group having 1 to 50 carbon atoms and the group having a hetero atom for $R^{33}$, reference may be made to the same ones as exemplified hereinabove for $R^{23}$ in the formula (F1). The plural groups represented by $R^{33}$ may be the same as or different from each other.

$R^{33}$ preferably represents a single bond. In the case where $R^{33}$ represents a divalent hydrocarbon group having from 1 to 50 carbon atoms and having intervening therein an ether group, examples thereof include a group having the following chemical structure.

$$-R^{36}(C_2H_4O)_a(C_3H_6O)_bR^{37}-$$

wherein $R^{36}$ and $R^{37}$ each independently represent an alkylene group having 1 to 10 carbon atoms; and a and b each represent an integer of 0 to 30, provided that a+b is an integer of 1 or more.

The viscosity at 23°C of the silicone oil (G1) is preferably 10 mPa·s or more, more preferably 20 mPa·s or more, further preferably 40 mPa·s or more, still further preferably 60 mPa·s or more, and still more further preferably 80 mPa·s or more, and is preferably 10,000 mPa·s or less, more preferably 5,000 mPa·s or less, and further preferably 4,000 mPa·s or less, from the standpoint of the enhancement of the workability in the production of the coaitng composition, and the standpoint of the enhancement of the spraying atomization property and the curability of the coating composition and the strength of the formed coating film.

In the description herein, the viscosity at 23°C of the silicone oil (G1) means a viscosity measured with a B-type rotary viscometer.

The antifouling coating composition can contain alone or two or more kinds of silicone oil (G1) either singly or as combined.

In the case where the antifouling coating composition (Y) contains the silicone oil (G1), the content of the silicone oil (G1) in the solid content of the composition is preferably 0.1% by mass or more, more preferably 1% by mass or more, and further preferably 3% by mass or more, and is preferably 50% by mass or less, more preferably 40% by mass or less, and further preferably 30% by mass or less, from the standpoint of the enhancement of antifouling property.

The silicone oil (G1) used may be a commercially available product. Examples of the commercially available product include "KF-96-1,000 cs" (manufactured by Shin-Etsu Chemical Co., Ltd., kinetic viscosity (25°C): 1,000 $mm^2/s$) for the polydimethylsiloxane (unmodified), "KF-50-1,000 cs" (manufactured by Shin-Etsu Chemical Co., Ltd., phenyl modification rate: 5%, kinetic viscosity (25°C): 1,000 $mm^2/s$) for the phenyl-modified polydimethylsiloxane, and "X-22-4272" (manufactured by Shin-Etsu Chemical Co., Ltd., an ether-modified polydimethylsiloxane, in which a part of $R^{31}$ is an alkyl group having an ether group, kinetic viscosity (25°C): 270 $mm^2/s$), "KF-6020" (manufactured by Shin-Etsu Chemical Co., Ltd., an ether-modified polydimethylsiloxane, in which a part of $R^{32}$ is an alkyl group having an ether group, kinetic viscosity (25°C): 180 $mm^2/s$), "FZ-2203" (manufactured by Dow Corning Toray Co., Ltd., a polydimethylsiloxane, in which a part of $R^{33}$ is an alkylene group having an ether group), and "FZ-2160" (manufactured by Dow Corning Toray Co., Ltd., a polydimethylsiloxane, in which a part of $R^{33}$ is a propylene group having an ether group) for the ether-modified polydimethylsiloxane.

[Polymer (G2) containing Constituent Unit derived from Hydrophilic Group-containing Unsaturated Monomer]

The polymer (G2) containing a constituent unit derived from a hydrophilic group-containing unsaturated monomer (which may be hereinafter referred to as a polymer (G2)) preferably contains the polymer (G2) that has a constituent unit derived from one or more kind of a hydrophilic group-containing unsaturated monomer selected from the group consisting of an unsaturated monomer (g21) represented by the following formula (I), tetrahydrofurfuryl (meth)acrylate (g22), 4-(meth)acryloylmorpholine (g23), and vinylpyrrolidone (g24).

Among these, the polymer (G2) having a constituent unit derived from the unsaturated monomer (g21) represented by the following formula (I) is preferably contained.

$$H_2C{=}CR^1{-}X^1{-}\left[\left(R^2O\right)_m\left(R^3O\right)_n\right]{-}R^4 \qquad (I)$$

In the formula (I), $R^1$ represents a hydrogen atom or a monovalent hydrocarbon group having 1 to 10 carbon atoms; $R^2$ represents an ethylene group or a propylene group; $R^3$ represents a divalent hydrocarbon group having 4 to 10 carbon atoms; $R^4$ represents a hydrogen atom or a monovalent hydrocarbon group having 1 to 30 carbon atoms; m represents an integer of 1 to 50; n represents an integer of 0 to 50; and $X^1$ represents an ester bond, an amide bond, or a single bond.

Examples of the monovalent hydrocarbon group represented by $R^1$ include an alkyl group, such as a methyl group and an ethyl group; an alkenyl group, such as a vinyl group and a propenyl group; an aryl group, such as a phenyl group; and an aralkyl group, such as a benzyl group, and an alkyl group is preferred. The number of carbon atoms of the monovalent hydrocarbon group represented by $R^1$ is preferably from 1 to 6, more preferably from 1 to 4, further preferably 1 or 2, and particularly preferably 1 (i.e., the monovalent hydrocarbon group is particularly preferably a methyl group). $R^1$ preferably represents a hydrogen atom or an alkyl group, more preferably a hydrogen atom or a methyl group, and further preferably a hydrogen atom.

In the case where m represents an integer of 2 or more, plural groups represented by $R^2$ may be the same as or different from each other. In the case where m represents an integer of 2 or more, $R^2$ preferably has at least one ethylene group. $R^2$ more preferably represents an ethylene group.

Examples of the divalent hydrocarbon group represented by $R^3$ include a linear or branched alkylene group, such as a butylene group; an alkenylene group; and an arylene group, such as a phenylene group, and among these, $R^3$ preferably represents a linear or branched alkylene group, more preferably a butylene group, and further preferably a n-butylene group. In the case where n represents an integer of 2 or more, plural groups represented by $R^3$ may be the same as or different from each other.

Examples of the monovalent hydrocarbon group represented by $R^4$ include a linear, branched, or cyclic saturated or unsaturated aliphatic hydrocarbon group and an aromatic hydrocarbon group, more specific examples thereof include a methyl group, an ethyl group, a propyl group, a butyl group, a hexyl group, a cyclohexyl group, a phenyl group, an octyl group, a dodecyl group, an octadecyl group, and a nonylphenyl group, and $R^4$ preferably represents a hydrogen atom or an aliphatic hydrocarbon group, more preferably a hydrogen atom or a methyl group, and further preferably a

methyl group.

In the case where $R^4$ represents these substituents, the polymer (G2) may exhibit favorable hydrophilicity, and an excellent antifouling property can be imparted to the formed antifouling coating film. In the case where $R^4$ represents a group containing a hetero atom other than a hydrogen atom and a carbon atom, the antifouling property may be lowered in some cases.

In the formula (I), m is preferably an integer of 1 to 15.

In the formula (I), n is preferably an integer of 0 to 20, and more preferably 0.

In the description herein, the case where two or more different repeating units are described in parallel to each other in the brackets shows that the repeating units may be repeated in any form or order of a random form, an alternate form, and a block form. Specifically, for example, a formula -[$X_3$-$Y_3$]-(wherein X and Y each represent a repeating unit) may be any of a random form -XXYXYY-, an alternate form -XYXYXY-, and a block form -XXXYYY- or -YYYXXX-.

In the formula (I), $X^1$ represents an ester bond (-C(=O)O-), an amide bond (-C(=O)NH-), or a single bond, and preferably an ester bond (-C(=O)O-).

In the case where $X^1$ represents an ester bond or an amide bond, the carbonyl carbon is preferably bonded to the carbon atom bonded to $R^1$.

The unsaturated monomer (g21) represented by the formula (I) is preferably a compound represented by the following formula (II) from the standpoint of the availability, the economic efficiency, and the like.

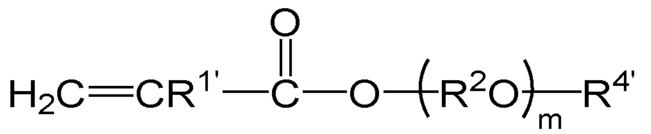 (II)

In the formula (II), $R^{1'}$ represents a hydrogen atom or a methyl group; $R^2$ represents an ethylene group or a propylene group; m represents an integer of 1 to 50; and $R^{4'}$ represents a hydrogen atom or a methyl group.

In the formula (II), $R^{1'}$ is preferably a hydrogen atom.

In the case where m represents an integer of 2 or more, plural groups represented by $R^2$ may be the same as or different from each other, and at least one of the groups represented by $R^2$ is preferably an ethylene group. $R^2$ more preferably represents an ethylene group.

m is preferably an integer of 1 to 15, more preferably an integer of 2 to 14, and further preferably an integer of 3 to 13.

In the case where m represents 1, $R^{4'}$ is preferably a hydrogen atom or a methyl group, and in the case where m represents an integer of 2 or more, $R^{4'}$ is preferably a methyl group.

The unsaturated monomer (g21) is preferably a compound represented by the following formula (III).

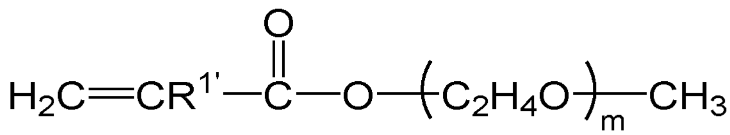 (III)

In the formula (III), $R^{1'}$ and m are the same as $R^{1'}$ and m in the formula (II).

Examples of the unsaturated monomer (g21) include 2-hydroxyethyl (meth)acrylate, 2-hydroxypropyl (meth)acrylate, 2-methoxyethyl (meth)acrylate, 2-methoxypropyl (meth)acrylate, polyethylene glycol mono(meth)acrylate, polypropylene glycol mono(meth)acrylate, poly(ethylene glycol-propylene glycol) mono(meth)acrylate, poly(ethylene glycol-butylene glycol) mono(meth)acrylate, methoxypolyethylene glycol mono(meth)acrylate, allyloxypoly(ethylene glycol-propylene glycol) mono(meth)acrylate, phenoxypolyethylene glycol-polypropylene glycol methacrylate, octoxypoly(ethylene glycol-propylene glycol) mono(meth)acrylate, dodecyloxypolyethylene glycol mono(meth)acrylate, octadecyloxypolyethylene glycol mono(meth)acrylate, nonylphenoxypolypropylene glycol acrylate, and ethylene glycol monoallyl ether. Among these, preferred examples thereof include 2-hydroxyethyl (meth)acrylate, 2-hydroxypropyl (meth)acrylate, 2-methoxyethyl (meth)acrylate, 2-methoxypropyl (meth)acrylate, and methoxypolyethylene glycol mono(meth)acrylate, more preferred examples thereof include 2-methoxyethyl (meth)acrylate, 2-methoxypropyl (meth)acrylate, and methoxypolyethylene glycol mono(meth)acrylate, and further preferred examples thereof include 2-methoxyethyl (meth)acrylate and methoxypolyethylene glycol mono(meth)acrylate.

The unsaturated monomer (g21) used may be a commercially available product, and examples thereof include NK Ester AM-90G (methoxypolyethylene glycol #400 acrylate), NK Ester AM-130G (methoxypolyethylene glycol #550 acrylate), NK Ester M-90G (methoxypolyethylene glycol #400 methacrylate), and NK Ester M-230G (methoxypolyethylene glycol #1000 methacrylate), all manufactured by Shin-Nakamura Chemical Co., Ltd.; Light Acrylate MTG-A (methoxy-triethylene glycol acrylate), Light Acrylate EC-A (ethoxy-diethylene glycol acrylate), Light Acrylate EHDG-AT (2-ethylhexyl-diethylene glycol acrylate), Light Ester HOA(N) (2-hydroxyethyl acrylate), Light Ester HO-250(N) (2-hydroxyethyl methacrylate), Light Ester HOP(N) (2-hydroxypropyl methacrylate), and Light Ester 041MA (methoxypolyethylene glycol methacrylate), all manufactured by Kyoeisha Chemical Co., Ltd.; Blemmer ANP-300 (nonylphenoxypolypropylene glycol acrylate), Blemmer AP-400 (polypropylene glycol monoacrylate), Blemmer 70PEP-350B (polyethylene glycol polypropylene glycol monomethacrylate), Blemmer 55PET-800 (polyethylene glycol tetramethylene glycol monomethacrylate), and Blemmer 50POEP-800B (octoxypolyethylene glycol polypropylene glycol methacrylate), all manufactured by NOF Corporation; SR504 (ethoxylated nonylphenyl acrylate), manufactured by Arkema, Inc.; and Viscoat #MTG (methoxypolyethylene glycol acrylate), manufactured by Osaka Organic Chemical Industry, Ltd.

As the tetrahydrofurfuryl (meth)acrylate (g22), any compound that has a tetrahydrofurfuryl (meth)acrylate structure can be used with no particular limitation, and can be a compound having one or more arbitrary substituents on the oxolane ring of tetrahydrofurfuryl (meth)acrylate. Examples of the substituent include an alkyl group having 1 to 6 carbon atoms, a halogenated alkyl group having 1 to 6 carbon atoms, an aryl group having 6 to 14 carbon atoms, an acyl group having 1 to 7 carbon atoms, a halogen atom, and a hydroxy group.

The tetrahydrofurfuryl (meth)acrylate (g22) is preferably tetrahydrofurfuryl acrylate or tetrahydrofurfuryl methacrylate, and more preferably tetrahydrofurfuryl acrylate.

As the 4-(meth)acryloylmorpholine (g23), any compound that has a 4-(meth)acryloylmorpholine structure can be used with no particular limitation, and can be a compound having one or more arbitrary substituents on the morpholine ring of 4-(meth)acryloylmorpholine. Examples of the substituent may be the same ones as exemplified hereinabove for (g22).

The 4-(meth)acryloylmorpholine (g23) is preferably 4-acryloylmorpholine or 4-methacryloylmorpholine, and more preferably 4-acryloylmorpholine.

As the vinylpyrrolidone (g24), any compound that has a vinylpyrrolidone structure can be used with no particular limitation, and can be a compound having one or more arbitrary substituents on the pyrrolidine ring. Examples of the substituent may be the same ones as exemplified hereinabove for (g22).

Examples of the vinylpyrrolidone (g24) include 1-vinyl-2-pyrrolidone, and also include 3-acetyl-1-vinylpyrrolidin-2-one and 3-benzoyl-1-vinylpyrrolidin-2-one. Among these, 1-vinyl-2-pyrrolidone is preferred.

In the polymer (G2), the content of the constituent unit derived from at least one selected from the group consisting of the unsaturated monomer (g21) represented by the formula (I), the tetrahydrofurfuryl (meth)acrylate (g22), the 4-(meth)acryloylmorpholine (g23), and the vinylpyrrolidone (g24) is preferably from 1 to 100% by mass, more preferably from 3 to 80% by mass, further preferably from 5 to 70% by mass, and still further preferably from 10 to 50% by mass.

The content (mass) of the constituent unit derived from at least one selected from the group consisting of the unsaturated monomer (g21), the tetrahydrofurfuryl (meth)acrylate (g22), the 4-(meth)acryloylmorpholine (g23), and the vinylpyrrolidone (g24) in the polymer (G2) can be assumed to be the same as the charged amount (mass) of the monomers (g21) to (g24) used for the polymerization reaction.

In the present invention, the polymer (G2) may be a homopolymer containing a constituent unit derived from one kind of the unsaturated monomer selected from the group consisting of the monomers (g21) to (g24), or a copolymer containing constituent units derived from two or more kinds of the unsaturated monomers selected from the group consisting of the monomers (g21) to (g24).

In the present invention, the polymer (G2) is preferably a copolymer containing a constituent unit derived from at least one kind of the unsaturated monomer selected from the group consisting of the monomers (g21) to (g24), and depending on necessity, a constituent unit derived from at least one of an additional unsaturated monomer (g25).

The additional unsaturated monomer (g25) preferably contains an unsaturated monomer (g25-1) represented by the following formula (IV).

$$H_2C=CR^{41}\text{-}X^2\text{-}R^{42} \qquad \text{(IV)}$$

In the formula (IV), $R^{41}$ represents a hydrogen atom or a monovalent hydrocarbon group having 1 to 10 carbon atoms; $R^{42}$ represents a hydrogen atom or a monovalent hydrocarbon group having 1 to 50 carbon atoms; and $X^2$ represents an ester bond, an amide bond, or a single bond.

Examples of the monovalent hydrocarbon group represented by $R^{41}$ in the formula (IV) include the groups exemplified above for $R^1$ in the formula (I), and $R^{41}$ preferably represents a hydrogen atom or an alkyl group, more preferably a hydrogen atom or a methyl group, and further preferably a hydrogen atom.

The monovalent hydrocarbon group represented by $R^{42}$ in the formula (IV) includes a linear, branched or cyclic aliphatic hydrocarbon group, and an aromatic hydrocarbon group, and more specifically, examples thereof include a methyl group, an ethyl group, a n-propyl group, an isopropyl group, a n-butyl group, an isobutyl group, a tert-butyl group, a sec-butyl group, a n-pentyl group, a n-hexyl group, a n-octyl group, an isooctyl group, a 2-ethylhexyl group, a dodecyl

group, an octadecyl group, a cyclohexyl group, a phenyl group, and a benzyl group. An n-butyl group, an isobutyl group, and a 2-ethylhexyl group are preferred.

In the formula (IV), $X^2$ represents an ester bond (-C(=O)O-), an amide bond (-C(=O)NH-), or a single bond, and an ester bond is preferred among these.

In the case where $X^2$ represents an ester bond or an amide bond, the carbonyl carbon preferably bonds to the carbon atom to which $R^{41}$ bonds.

Examples of the unsaturated monomer (g25-1) include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, n-pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, isostearyl (meth)acrylate, phenyl (meth)acrylate, and benzyl (meth)acrylate, and among these, n-butyl (meth)acrylate, isobutyl (meth)acrylate, and 2-ethylhexyl (meth)acrylate are preferred.

The additional unsaturated monomer (g25) also preferably contains an organopolysiloxane group-containing unsaturated monomer (g25-2).

The organopolysiloxane group-containing unsaturated monomer (g25-2) used may be a commercially available product, and examples thereof include Silaplane TM-0701T (tris(trimethylsiloxy)silylpropyl methacrylate), Silaplane FM-0711 (methacrylic group-containing dimethylpolysiloxane, number average molecular weight: 1,000), and Silaplane FM-0721 (methacrylic group-containing dimethylpolysiloxane, number average molecular weight: 5,000), all manufactured by JNC Corporation.

In the case where the polymer (G2) contains a constituent unit derived from the other monomer (g25), the content of the constituent unit in the polymer (G2) is preferably 20 to 99% by mass, more preferably 30 to 97% by mass, even more preferably 50 to 95% by mass, further more preferably 50 to 90% by mass.

In the present invention, the weight average molecular weight (Mw) of the polymer (G2) is preferably 1,000 or more, more preferably 3,000 or more, further preferably 5,000 or more, and particularly preferably 7,000 or more, and is preferably 150,000 or less, more preferably 100,000 or less, further preferably 50,000 or less, and particularly preferably 30,000 or less from the standpoint of the antifouling property of the formed antifouling coating film and the viscosity of the antifouling coating composition.

The weight average molecular weight (Mw) of the polymer (G2) that is in the range is preferred since the formed coating film can be imparted with good antifouling property.

In the case where the antifouling coating composition (Y) contains the polymer (G2), the content of the polymer (G2) in the antifouling coating composition is preferably 0.1 to 50% by mass, more preferably 0.5 to 25% by mass, even more preferably 2 to 10% by mass, from the standpoint of the enhancement of the antifouling property of the antifouling coating film formed of the coating composition, and from the standpoint of the retention ability of the strength of the coating film.

In the case where the antifouling coating composition (Y) contains the polymer (G2), the content of the polymer (G2) in solid content of the antifouling coating composition is preferably 0.2% by mass or more, more preferably 1% by mass or more, and further preferably 4% by mass or more, and is preferably 80% by mass or less, more preferably 50% by mass or less, and further preferably 20% by mass or less, from the standpoint of the enhancement of the antifouling property of the antifouling coating film, and from the standpoint of the retention ability of the strength of the coating film.

In the present invention, the polymer (G2) may be used alone or as a combination of two or more kinds thereof.

[Organic Solvent (H)]

The antifouling coating composition (Y) may contain an organic solvent (H) for the purpose of the enhancement of the coating workability by retaining the low viscosity of the coating composition and enhancing the spraying atomization property thereof.

Examples of the organic solvent (H) include an aromatic hydrocarbon organic solvent, an aliphatic hydrocarbon organic solvent, an alicyclic hydrocarbon organic solvent, a ketone organic solvent, and an ester organic solvent, and among these, an aromatic hydrocarbon organic solvent and a ketone organic solvent are preferred.

Examples of the aromatic hydrocarbon organic solvent include toluene, xylene, and mesitylene.

Examples of the aliphatic hydrocarbon organic solvent include pentane, hexane, heptane, and octane.

Examples of the alicyclic hydrocarbon organic solvent include cyclohexane, methylcyclohexane, and ethylcyclohexane.

Examples of the ketone organic solvent include acetylacetone, acetone, methyl ethyl ketone, methyl isobutyl ketone, and dimethyl carbonate.

Examples of the ester organic solvent include propylene glycol monomethyl ether acetate.

The organic solvent (H) may be used alone or as a combination of two or more kinds thereof.

In the case where the antifouling coating composition (Y) contains the organic solvent (H), the content of the

organic solvent (H) in the coating composition may be appropriately controlled corresponding to the viscosity of the coating composition, is preferably 1% by mass or more, more preferably 10% by mass or more, further preferably 20% by mass or more, and still further preferably 25% by mass or more, and from the standpoint of the prevention of the sagging in coating operations, is preferably 70% by mass or less, and more preferably 40% by mass or less.

[Inorganic Filler (I)]

The antifouling coating composition (Y) may contain an inorganic filler (I) for the purpose of enhancing the flowability and the thixotropy thereof.

In the case where the antifouling coating composition (Y) contains an inorganic filler (I), the flowability and the thixotropy may better, and a coating film having a sufficient thickness can be formed in a small number of coating operations even on a vertical coating surface. Furthermore, the antifouling coating film may be improved in properties thereof including hardness, tensile strength and elongation, in a well-balanced manner.

Examples of the inorganic filler (I) include silica, mica, calcium carbonate, aluminum carbonate, magnesium carbonate, barium carbonate, aluminum oxide, aluminum hydroxide, aluminum silicate, magnesium silicate, potassium feldspar, zinc oxide, kaolin, alumina white, barium sulfate, calcium sulfate, zinc sulfate, and glass short fibers. The inorganic filler (I) may be used alone or as a combination of two or more kinds thereof.

Among these, the inorganic filler (I) preferably contains silica from the standpoint of the enhancement of the properties of the antifouling coating film including the hardness, the tensile strength and the elongation, in a well-balanced manner.

The silica used may be hydrophilic silica (surface-non-treated silica), such as wet method silica (hydrated silica) and dry method silica (fumed silica and anhydrous silica). The silica used may also be hydrophobic silica obtained by subjecting the surface of the aforementioned silica to a hydrophobic treatment, such as hydrophobic wet method silica and hydrophobic fumed silica. The silica may be used alone or as a combination of two or more kinds thereof.

The wet method silica is not particularly limited, and for example, wet method silica having an adsorbed water content of 4 to 8% by mass, a bulk density of 200 to 300 g/L, a primary particle diameter of 10 to 30 $\mu$m, and a specific surface area (BET surface area) of 10 $m^2/g$ or more is preferred.

The dry method silica is not particularly limited, and for example, dry method silica having a water content of 1.5% by mass or less, a bulk density of 50 to 100 g/L, a primary particle diameter of 8 to 20 $\mu$m, and a specific surface area of 10 $m^2/g$ or more is preferred.

The hydrophobic fumed silica includes ones obtained by subjecting dry method silica to a surface treatment with at least one kind of an organosilicon compound selected from methyltrichlorosilane, dimethyldichlorosilane, hexamethyldisilazane, hexamethylcyclotrisiloxane, octamethylcyclotetrasiloxane, and the like. The hydrophobic fumed silica undergoes less water adsorption with the lapse of time, and the water content thereof is preferably 0.3% by mass or less, and more preferably from 0.1 to 0.2% by mass.

The hydrophobic fumed silica is not particularly limited, and for example, hydrophobic fumed silica having a primary particle diameter of 5 to 50 nm, a bulk density of 50 to 100 g/L, and a specific surface area of 10 $m^2/g$ or more is preferred. In the case where the hydrophobic fumed silica is subjected to the heat treatment described later, the content of water adsorbed on the surface of the hydrophobic fumed silica after the heat treatment may be decreased in some cases. In this case, the water content of the hydrophobic fumed silica is preferably 0.2% by mass or less, more preferably 0.1% by mass or less, and further preferably from 0.05 to 0.1% by mass.

The silica used may be a commercially available product. Examples of the commercially available product include "Aerosil R974", "Aerosil RX200", and "Aerosil 200", all manufactured by Nippon Aerosil Co., Ltd.

The silica may be a heat-treated material obtained by performing a heat treatment together with the curable organopolysiloxane (B) in advance. By performing a heat treatment of silica and a part or the whole of the curable organopolysiloxane, the affinity of these components may be enhanced to provide such effects as the suppression of aggregation of the silica.

Examples of the method for performing the heat treatment of the silica and the curable organopolysiloxane include a method of performing a heat treatment under atmospheric pressure or reduced pressure, at a temperature of preferably 100°C or more and the decomposition temperature of the mixed component or less, more preferably from 100 to 300°C, and further preferably from 140 to 200°C, for a period of preferably from 3 to 30 hours.

The silica may be mixed in the coating composition in the form of a kneaded product obtained by kneading with the curable organopolysiloxane. The use of the kneaded product obtained by kneading the silica with the curable organopolysiloxane may suppress the excessive increase of the viscosity of the coating composition.

Examples of the method for producing the kneaded product of the silica and the curable organopolysiloxane include the method described in JP 2004-182908 A.

The content of the inorganic filler (I) per 100 parts by mass of the curable organopolysiloxane (B) is preferably 0.5 parts by mass or more, more preferably 1 part by mass or more, further preferably 2 parts by mass or more, still

further preferably 3 parts by mass or more, still more further preferably 4 parts by mass or more, still more further preferably 5 parts by mass or more, still more further preferably 6 parts by mass or more, and still more further preferably 7 parts by mass or more, from the standpoint of the enhancement of the thixotropy of the coating composition, and the standpoint of the enhancement of the film strength and the film hardness, and is preferably 100 parts by mass or less, more preferably 50 parts by mass or less, and further preferably 20 parts by mass or less, from the standpoint of the suppression of the excessive increase of the viscosity of the coating composition.

In the case where the antifouling coating film of the present invention contains the inorganic filler (I), the content of the inorganic filler (I) in the solid content of the antifouling coating film is preferably 0.1 to 20% by mass, more preferably 1 to 10% by mass, from the standpoint of the enhancement of the film strength and the film hardness.

[Organosilicon Crosslinking Agent (J)]

The antifouling coating composition (Y) may contain an organosilicon crosslinking agent (J) for the purpose of enhancing the curability and the film strength of the antifouling coating film.

The organosilicon crosslinking agent (J) is preferably a compound represented by the following formula (J1) and/or a partial condensate thereof.

$$R^{51}{}_{d}SiY_{(4-d)} \qquad (J1)$$

In the formula (J1), $R^{51}$ represents a monovalent hydrocarbon group having 1 to 6 carbon atoms; Y each independently represents a hydrolyzable group; and d represents an integer of 0 to 2.

Examples of the monovalent hydrocarbon group represented by $R^{51}$ include a linear or branched alkyl group, such as a methyl group, an ethyl group, and a propyl group, a cyclic alkyl group, such as a cyclohexyl group, an alkenyl group, such as a vinyl group, and an aryl group, such as a phenyl group. Among these, a methyl group and an ethyl group are preferred.

In the case where d represents 2, the plural groups represented by $R^{51}$ may be the same as or different from each other.

Examples of the hydrolyzable group represented by Y include the hydrolyzable groups exemplified for the formula (B1). Among these, an alkoxy group and an oxime group are preferred, an alkoxy group is more preferred, and a methoxy group and an ethoxy group are even more preferred. The plural groups represented by Y may be the same as or different from each other.

In the formula (J1), d is preferably 0 from the standpoint of the enhancement of the curability and the film strength of the antifouling coating film.

The organosilicon crosslinking agent (J) for use herein may be a commercially available product. As the commercially available product, examples of the tetraethyl orthosilicate include "Ethyl Silicate 28", manufactured by Colcoat Co., Ltd., and "Ethyl Orthosilicate", manufactured by Tama Chemicals Co., Ltd. Examples of the partial condensate of the tetraethyl orthosilicate include "Silicate 40", manufactured by Tama Chemicals Co., Ltd., and "Wacker Silicate TES 40 WN", manufactured by Asahi Kasei Wacker Silicone Co., Ltd. Examples of the alkyltrialkoxysilane include "KBM-13", manufactured by Shin-Etsu Chemical Co., Ltd.

The organosilicon crosslinking agent (J) may be used alone or as a combination of two or more kinds thereof.

In the case where the antifouling coating composition (Y) contains the organosilicon crosslinking agent (J), the content of the organosilicon crosslinking agent (J) in the solid content of the antifouling coating composition is preferably 0.2 to 20% by mass, and more preferably 0.4 to 10% by mass, from the standpoint of the control of the curing rate of the formed coating film, and the standpoint of the enhancement of the film strength.

[Curing Catalyst (K)]

The antifouling coating composition (Y) may contain a curing catalyst (K) for the purpose of enhancing the curing rate of the formed coating film and enhancing the strength of the coating film.

Examples of the curing catalyst (K) include:

a tin carboxylate compound, such as tin naphthenate and tin oleate;

a tin compound, such as dibutyltin diacetate, dibutyltin acetoacetonate, dibutyltin dilaurate, dibutyltin dioleate, dibutyltin oxide, dibutyltin dimethoxide, dibutyltin dipentanoate, dibutyltin dioctoate, dibutyltin dineodecanoate, dioctyltin dineodecanoate, bis(dibutyltin laurate) oxide, dibutylbis(triethoxysiloxy) tin, bis(dibutyltin acetate) oxide, dibutyltin bis(ethyl maleate), and dioctyltin bis(ethyl maleate);

a titanate ester compound and a titanium chelate compound, such as tetraisopropoxy titanium, tetra-N-butoxy titanium, tetrakis(2-ethylhexyloxy) titanium, dipropoxy bis(acetylacetonato) titanium, and titanium isopropoxy octyl

glycol;

an organic metal compound, such as zinc naphthenate, zinc stearate, zinc 2-ethyloctoate, iron 2-ethylhexanoate, cobalt 2-ethylhexanoate, manganese 2-ethylhexanoate, cobalt naphthenate, and an alkoxy aluminum compound; and

a lower fatty acid salt of an alkali metal, such as potassium acetate, sodium acetate, and lithium oxalate.

The curing catalyst (K) may be used alone or as a combination of two or more kinds thereof.

In the case where the antifouling coating composition (Y) contains the curing catalyst (K), the content of the curing catalyst (K) in the solid content of the coating composition is preferably 0.001 to 10% by mass, and more preferably 0.01 to 1% by mass, from the standpoint of the enhancement of the curing rate of the formed coating film, and the standpoint of the good balance with respect to the pot life after preparing the coating composition.

[Coloring Pigment (L)]

The antifouling coating composition (Y) may contain a coloring pigment (L) except for the inorganic filler (I) for the purpose of enhancing the design property and the visibility of the antifouling coating film and the coating composition.

Examples of the coloring pigment (L) include an inorganic coloring pigment, such as carbon black, red ocher (red iron oxide), titanium white (titanium oxide), and yellow iron oxide, and an organic coloring pigment, such as naphthol red and phthalocyanine blue. The coloring pigment may further contain various colorants, such as a dye.

The coloring pigment (L) may be used alone or as a combination of two or more kinds thereof.

In the case where the antifouling coating composition (Y) contains the coloring pigment (L), the content of the coloring pigment (L) in the solid content of the antifouling coating composition is preferably 0.5 to 20% by mass.

<Organisms Repellent (M)>

The antifouling coating composition (Y) may contain an organisms repellent (M) for the purpose of enhancing the antifouling property of the antifouling coating film.

Examples of the organisms repellent (M) include cuprous oxide, copper rhodanide, copper, pyrithione salt, 4-bromo-2-(4-chlorophenyl)-5-(trifluoromethyl)-1H-pyrrole-3-carbonitrile (also known as Tralopyril), 4,5-dichloro-2-n-octyl-4-isothiazolin-3-one, borane-nitrogen-based base adduct (e.g., pyridine-triphenylborane, 4-isopropylpyridine-diphenylmethylborane), (+/-)-4-[1-(2,3-dimethylphenyl)ethyl]-1H-imidazole (also known as medetomidine), N,N-dimethyl-N'-(3,4-dichlorophenyl)urea, N-(2,4,6-trichlorophenyl)maleimide,2-methylthio-4-t-butylamino-6-cyclopropylam ino- 1,3,5-triazine, 2,4,5,6-tetrachloroisophthalonitrile, bisdimethyldithiocarbamoyl zinc ethylenebisdithiocarbamate, chloromethyl-n-octyl disulfide, N,N-dimethyl-N'-phenyl-(N'-fluorodichloromethylthio)sulfamide, tetraalkylthiuram disulfide, zinc dimethyldithiocarbamate, zinc ethylenebisdithiocarbamate, 2,3-dichloro-N-(2',6'-diethylphenyl)maleimide, and 2,3-dichloro-N-(2'-ethyl-6'-methylphenyl)maleimide. The pyrithione salt includes those represented by the following general formula (M1).

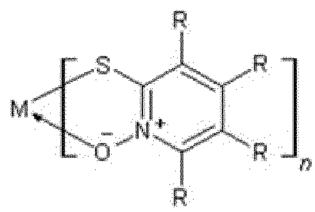

· · · (M1)

In the formula (M1), R each independently represents a hydrogen atom, an alkyl group group having 1 to 6 carbon atoms, a cycloalkyl group having 3 to 6 carbon atoms, an alkenyl group having 2 to 6 carbon atoms, a phenyl group, an alkoxy group having 1 to 6 carbon atoms, or a halogenoalkyl group having 1 to 6 carbon atoms, M represents a metal atom of Cu, Zn, Na, Mg, Ca, Ba, Fe or Sr, and n represents a valence of the metal atom M.

Among these, preferred are cuprous oxide, copper rhodanide, pyrithione salt, Tralopyril, 4,5-dichloro-2-n-octyl-4-isothiazolin-3-one, and borane-nitrogen-based base adduct (e.g., pyridine-triphenylborane, and 4-isopropylpyridine-diphenylmethylborane), from the standpoint of the storage stability and the curability of the antifouling coating composition and from the standpoint of the antifouling property of the formed antifouling coating film; more preferred is pyrithione salt of the formula (M1) where n is 2; even more preferred is pyrithione salt of the formula (M1) where M is Cu or Zn; and further more preferred is pyrithione salt of the formula (M1) where M is Cu.

In the case where the antifouling coating composition (Y) contains the organisms repellent (M), the content of the organisms repellent (M) in the solid content of the coating composition is, from the standpoint of enhancing the

antifouling property of the antifouling coating film to be formed, preferably 0.05 to 50% by mass, more preferably 1 to 30% by mass.

[Anti-sagging and Anti-settling Agent (N)]

The antifouling coating composition (Y) may contain an anti-sagging and anti-settling agent (N).

Examples of the anti-sagging and anti-settling agent (N) include organoclay wax (such as a stearate salt, a lecithin salt, and an alkyl sulfonate and the like of Al, Ca, and Zn), organic wax (such as polyethylene wax, oxidized polyethylene wax, amide wax, polyamide wax, and hydrogenated castor oil wax), and a mixture of organoclay wax and organic wax.

Examples of commercially-available products usable as the anti-sagging and anti-settling agent (N) include "Disparlon 305", "Disparlon 4200-20", and "Disparlon A630-20X", all manufactured by Kusumoto Chemicals, Ltd.

The anti-sagging and anti-settling agent (N) may be used alone or as a combination of two or more kinds thereof.

In the case where the antifouling coating composition (Y) contains the anti-sagging and anti-settling agent (N), the content of the anti-sagging and anti-settling agent (N) in the solid content of the coating composition is preferably 0.01 to 10% by mass, and more preferably 0.1 to 3% by mass.

As the enzyme, the dewatering agent, the flame retardant and the thermal conductivity improver that are exemplified as the optional components in the antifouling coating composition (Y), for example, those described in WO2017/209029 can be used. As the content of these optional components, preferred is the amount described in the literature.

<Kit of Coating Composition>

The antifouling coating composition (Y) may be formed as a one-pack type coating material composed of a single component, or may also be formed as a multi-pack type coating material composed of two or more components.

In the case of a multi-pack type coating material, it is preferred that the respective components (respective liquids) each contain one or plural components, are individually packed, and then stored and kept in a state of being charged in a container, such as a can, etc., and by mixing the contents of the respective components at the time of coating, the antifouling coating composition (Y) can be prepared.

[Antifouling Coating Film with Cover Film]

The antifouling coating film with a cover film of the present invention is provided with a cover film (x) formed on one surface of an antifouling coating film (y). The profile of the surface of the cover film (x) and that of the antifouling coating film (y) via which the films are in contact with each other is not specifically limited, and may be a flat profile or may have a fine concavity and convexity shape, but preferably has a riblet surface structure.

The riblet surface structure referred in the description herein is a fine concavity and convexity shape having a periodic structure, and the surface of the cover film (x) and that of the antifouling coating film (y) via which the films are in contact with each other are so configured as to be inverted to each other. In the water-contacting structure with an antifouling coating film to be mentioned below, when a riblet surface stricture is formed in the surface (water-contacting surface) thereof and when a fluid is in contact with the surface thereof, the riblet surface structure exhibits an effect of suppressing the occurrence of a turbulence flow of the fluid.

Examples of the riblet surface structure include the groove structure described in JP 2011-530443 A and the structure having the particular periodic pattern described in JP 2012-508128 A, and a structure having a groove structure is preferred from the standpoint of the convenience in the production of the structure.

The riblet surface structure may be characterized by the difference between the heights of the concavity and convexity, i.e., the riblet height. The riblet height h of the antifouling coating film (y) is preferably 0.1 to 1,000 pm, more preferably 0.5 to 500 pm, further preferably 1 to 100 pm, from the standpoint of easiness in forming the riblet structure. Regarding the riblet height h, a 10-point average roughness Rzjis (JIS B0601:2001) in an arbitrary cross section of a riblet surface in an arbitrary range where periodic concavity and convexity can be recognized is measured and designated as the riblet height h.

In the case where the riblet structure is a groove structure, examples thereof include structures of V-shaped grooves, U-shaped grooves, rectangular grooves, and trapezoidal grooves. From the standpoint of easiness in forming the riblet structure, the average distance between the tops of the concavity and convexity in the direction perpendicular to the longitudinal direction of the groove structure, i.e., the pitch S ($\mu$m) of the groove structure, is preferably 0.5 to 5, more preferably 0.8 to 4, further preferably 1.0 to 3.5, in terms of a ratio S/h in relation to the riblet height h.

[Method of manufacturing Antifouling Coating Film with Cover Film]

The antifouling coating film with a cover film of the present invention is formed of the above-mentioned cover film (x) and the antifouling coating composition (Y), and for example, the antifouling coating film (Y) is applied onto the cover film (x) to give a coated article, and then the coated article is dried and/or cured to give an antifouling coating film with the cover film.

The method of applying the antifouling coating composition (Y) to the cover film (x) may be a known method, and examples thereof include a method using a spray, a brush, a roller, a film applicator, a flow coater or a roll coater, and a method of impregnating the cover film (x) in the antifouling coating composition (Y).

In the case where an antifouling coating film with a cover film having a riblet surface profile in the facing surface of the two films is produced, there can be employed a method of using a cover film having the above-mentioned riblet surface profile, and for example, there can be employed a method of forming the antifouling coating film (y) on the riblet profile-having surface of the cover film (x).

The antifouling coating composition (Y) applied to the cover film (x) according to the above-mentioned method may be dried and/or cured, for example, by allowing to stand it under a condition of 25°C for a period of approximately in a range of 0.5 to 3 days to form the antifouling coating film (y), thereby providing an antifouling coating film with a cover film. The antifouling coating composition (Y) may be dried and/or cured with blowing air under heating.

The thickness of the antifouling coating film (y) is preferably approximately in a range of 100 to 2,000 pm from the standpoint of the enhancement of the strength of the coating film. Examples of the method for producing the antifouling coating film having the thickness include a method of applying the coating composition once or multiple times to a thickness per one time coating of preferably 30 to 400 μm, and more preferably 50 to 300 pm.

The shape of the antifouling coating film with a cover film of the present invention is not particularly limited, and may be appropriately set depending on the purpose. Specific examples of the planar form thereof include a band form, a strip form, a square form, an elliptical form, and a trapezoidal form.

[Antifouling Tape]

The antifouling tape of the present invention has the antifouling coating film with a cover film and a pressure-sensitive adhesive layer (v), wherein the pressure-sensitive adhesive layer (v) is on the surface opposite to the surface of the antifouling coating film (y) that is in contact with the cover film (x), optionally via an intermediate layer (w). The antifouling tape may be so configured that the antifouling coating film (y) and the pressure-sensitive adhesive layer (v) are directly laminated, or the antifouling coating film (y) and the pressure-sensitive adhesive layer (v) are laminated via an intermediate layer (w).

<Intermediate Layer (w)>

The intermediate layer (w) includes at least one selected from the group consisting of a substrate layer, a bonding layer and a barrier layer. The bonding layer has a function to enhance the bonding force between the upper layer and the lower layer of the intermediate layer, the barrier layer has a function to reduce the migration of water and other liquid matters through the intermediate layer, and the substrate layer has a function to enhance the strength of the laminated film structure. A single layer of the intermediate layer (w) may have two or more those functions.

The intermediate layer (w) may be one or more layers provided between the antifouling coating film (y) and the pressure-sensitive adhesive layer (v), and in the case where two or more layers are laminated, they may be the same as or different from each other, and may be laminated in any order.

Not specifically limited, the intermediate layer (w) having a function of a bonding layer may be any one excellent in adhesiveness to the upper layer and the lower layer of the intermediate layer, and examples thereof include a layer obtained by drying and curing a commercially available tie-coating or primer. In the case where the intermediate layer is in contact with the antifouling coating film containing the curable organopolysiloxane as the upper layer, in particular, a silicone resin tie-coating or a silicone resin primer is preferably used.

Not specifically limited, the intermediate layer (w) having a function of a barrier layer may be any one having an excellent function of reducing the migration of water and other liquid matters through the intermediate layer, and examples thereof include a commercially available anticorrosion coating composition and the water vapor barrier layer described in JP 2015-224334 A.

Not specifically limited, the intermediate layer (w) having a function of a substrate layer may be any one having a function of enhancing the strength of the laminated film structure, and examples thereof include the layer described in JP 2013-194124 A.

Examples of the intermediate layer include a material, such as a resin, a metal, paper, a nonwoven fabric, a woven fabric, or glass, or a coating film, a film, and a sheet constituted by a composite material obtained by combining

these materials.

Examples of the resin used as the material of the intermediate layer include a silicone resin; an acrylic resin; a polyolefin resin; a polyvinyl resin; a (co)polymer of an unsaturated monomer, such as polystyrene; a polyester resin, such as polyethylene terephthalate, polybutylene terephthalate, and polyethylene naphthalate; a polyurethane resin; an epoxy resin; a polyacetal; a polycarbonate; an acetyl cellulose; and a composite material thereof.

Examples of the metal constituting the intermediate layer include ones constituted by one or more kinds of various metal elements selected from the group consisting of iron, aluminum, titanium, copper, and the like.

Examples of the paper constituting the intermediate layer include non-coated paper for printing, such as high-quality paper and medium-quality paper, and coated paper, such as art paper and coat paper, and also include ones referred to as Japanese paper and tissue paper.

Among these, for the intermediate layer that mainly functions as the bonding layer, a resin is preferably used as the material therefor, and a silicone resin and a (co)polymer of an unsaturated monomer are preferably used as the material therefor, from the standpoint of the adhesiveness and the convenience in production; for the intermediate layer that mainly functions as the barrier layer, a resin is preferably used as the material therefor, and a silicone resin, a (co)polymer of an unsaturated monomer, and an epoxy resin are more preferably used as the material therefor, from the standpoint of the water resistance and the convenience in production; and for the intermediate layer that mainly functions as the substrate layer, a resin, a metal, and paper are preferably used as the material therefor, and in the case where a resin is used as the substrate, a (co)polymer of an unsaturated monomer and a polyurethane resin are more preferred.

<Pressure-sensitive Adhesive Layer (v)>

The pressure-sensitive adhesive layer (v) may be any appropriate pressure-sensitive adhesive layer within such a range that does not impair the effects of the present invention, and for example, the pressure-sensitive adhesive layer described in JP 2013-194124 A may be used. Examples of the material for the pressure-sensitive adhesive layer include an acrylic resin pressure-sensitive adhesive, an epoxy resin pressure-sensitive adhesive, an amino resin pressure-sensitive adhesive, a vinyl resin (such as a vinyl acetate polymer) pressure-sensitive adhesive, a curable acrylic resin pressure-sensitive adhesive, and a silicone resin pressure-sensitive adhesive. The material for the pressure-sensitive adhesive layer may be used alone or as a combination of two or more kinds thereof.

The pressure-sensitive adhesive layer may be a product commercially available as a substrateless tape, and examples thereof include a substrateless silicone tape "NSD-100", manufactured by Nippa Co., Ltd.

The thickness of the pressure-sensitive adhesive layer is preferably 10 to 150 μm, and more preferably 20 to 100 pm, from the standpoint of the pressure-sensitive adhesive force and the handleability.

The pressure-sensitive adhesive force of the pressure-sensitive adhesive layer in the antifouling tape of the present invention is preferably 5 to 30 N/25 mm. The pressure-sensitive adhesive force of the pressure-sensitive adhesive layer is the pressure-sensitive adhesive force to SUS 304 as an adherend at a peeling angle of 180° according to JIS Z0237:2009.

The antifouling tape may have the structures described in JP 2013-194124 A and JP 2016-124994 A.

[Production Method for Water-Contacting Structure with Antifouling Coating Film]

The production method for a water-contacting structure with an antifouling coating film of the present invention includes a step 1 of arranging and fixing the antifouling coating film with a cover film of the present invention or the antifouling tape of the present invention on at least a part of a surface of a water-contacting structure in such a manner that the cover film (x) can be on the water-contacting surface side and that the antifouling coating film (y) can be on the water-contacting structure side, and a step 2 of removing the cover film (x) from the antifouling coating film (y) by contact with water.

<Step 1>

The antifouling tape of the present invention is arranged and fixed in such a manner that the pressure-sensitive adhesive layer (v) can be in contact with at least a part of a surface of a water-contacting structure so that the cover film (x) can be on the water-contacting surface side and the antifouling coating film (y) can be on the water-contacting structure side.

The antifouling coating film with a cover film of the present invention is arranged and fixed according to a method of attaching a surface of the antifouling coating film (y) opposite to the surface thereof that is in contact with the cover film (x) to at least a part of a surface of a water-contacting structure, directly or via an arbitrary pressure-sensitive adhesive layer, so that the cover film (x) can be on the water-contacting surface side and the antifouling coating film (y) can be

on the water-contacting structure side.

There are a case where the antifouling tape or the antifouling coating film with a cover film is adhered to only a part of a water-contacting structure and a case where a plurality of such antifouling tapes or antifouling coating films are adhered thereover adjacently to each other, and these cases may have a problem of detachment and contamination proceeding at the end of the adhered antifouling tapes and antifouling coating films. Accordingly, for example, the end may be sealed by coating with the antifouling coating composition (Y), or the method of using the easily adhesive pressure-sensitive adhesive tape described in JP 2013-155232 A and JP 2013-155233 Amay also be used.

As the adhering device, for example, for example, the device described in WO 2016/193326 may also be used.

In the case where the antifouling coating film with a cover film of the present invention has a substrate sheet for cover film, the substrate sheet for cover film is arranged on at least a part of a surface of a water-contacting structure in such a manner that the substrate sheet can be on the outermost side of the water-contacting structure in the step 1, and accordingly, the antifouling coating film with a cover film or the antifouling tape of the present invention can be arranged and fixed in such a manner that the cover film (x) can be on the water-contacting surface side and the antifouling coating film (y) can be on the water-contacting structure side.

<Step 2>

The step 2 is a step of removing the cover film (x) from the antifouling coating film (y) by contact with water. In the present invention, the step 2 is carried out after the step 1.

The method of removing the cover film (x) from the antifouling coating film (y) by contact with water includes a method of peeling the cover film (x) swollen with water, and a method of removing the cover film (x) dissolved in water. In the water-contacting structure with an antifouling coating film produced by removal of the cover film (x) according to the above-mentioned method, the antifouling coating film (y) forms a new water-contacting surface and exhibits an antifouling property to prevent adhesion of aquatic organisms.

<Step 3>

In the case where the antifouling coating film with a cover film of the present invention has a substrate sheet for cover film, the production method preferably contains a step 3 of removing the substrate sheet for cover sheet. Preferably, the step 3 is carried out before or simultaneously with the step 2.

In the case where the resin to constitute the substrate sheet for cover film is PET or the like poorly soluble in water, preferably, the step 3 is carried out simultaneously with the step 2, and for example, when the cover film (x) is swollen with water, the cover film (x) is peeled along with the substrate sheet and removed from the antifouling coating film (y).

<Water-Contacting Structure with Antifouling Coating Film>

The water-contacting structure with an antifouling coating film has the antifouling coating film (y) on at least a part of a surface of a water-contacting structure.

In the present invention, a water-contacting structure is a structure to be used in contact with water.

Examples of the water-contacting structure include a structure used for the purpose of traveling in water, examples of which include a ship (such as an outer hull of a large scale steel ship, e.g., a container ship and a tanker, a fishing boat, an FRP boat, a wooden boat, and a yacht, and a newly built ship and a repaired ship thereof), a fishing material (such as a rope, a fishing net, and a fishing gear), a diver suit, swimming goggles, an oxygen cylinder, a swim suit, and a torpedo; a structure used for transporting water, examples of which include a water conduit, a water circulation pipe, and a seawater utilization equipment (such as a seawater pump); and other various structures, examples of which include a marine cable, a mega-float, a buoy, a gulf road, an undersea tunnel, and seaport equipment.

The water-contacting structure is preferably a structure used for the purpose of traveling in water or a structure used for transporting water from the standpoint that the utilization of the effect of decreasing the water flow frictional resistance is expected by the riblet surface structure on the surface, and is more preferably a ship from the standpoint that the good antifouling property and the effect of decreasing the water flow frictional resistance can be obtained.

The water-contacting structure with an antifouling coating film of the present invention may have an intermediate layer and/or a pressure-sensitive adhesive layer described above, which may optionally intervene between the water-contacting structure and the antifouling coating film (y).

Examples

The present invention will be described more specifically with reference to examples below, but the present

invention is not limited to the examples.

[Production of Unsaturated Carbonyl Compound (A)]

<Production Example of Unsaturated Carbonyl Compound (A-1)>

In a reactor equipped with a condenser tube, a thermometer, a dropping device, a heating and cooling jacket and a stirrer, 20.3 parts by mass of 2-hydroxyethyl acrylate ("BHEA" by Nippon Shokubai Co., Ltd.), 75 parts by mass of polyethylene glycol having Mw of 600 ("PEG-600" by Sanyo Chemical Industries, Ltd.) as a polyol, 6.7 parts by mass of dimethylolpropionic acid ("Bis-MPA" by Perstorp Corporation), 0.39 parts by mass of dibutyl tin dilaurate (DBTL) as a catalyst, 0.06 parts by mass of p-methoxyphenol ("MQ" by Kawaguchi Chemical Industry Co., Ltd.) as a polymerization inhibitor, and 39.4 parts by mass of 4-acryloylmorpholine ("ACMO" by KJ Chemicals Corporation) as a reactive diluent were heated up to 80°C with stirring, and 55.5 parts by mass of isophorone diisocyanate (by VENCOREX Corporation) was added dropwise thereto and reacted at 80°C for 2 hours to give an unsaturated carbonyl compound (A-1).

<Production Example of Unsaturated Carbonyl Compound (A-2)>

In a reactor equipped with a condenser tube, a thermometer, a dropping device, a heating and cooling jacket and a stirrer, 38.1 parts by mass of 2-hydroxyethyl acrylate ("BHEA" by Nippon Shokubai Co., Ltd.), 93.8 parts by mass of polyethylene glycol having Mw of 600 ("PEG-600" by Sanyo Chemical Industries, Ltd.) as a polyol, 0.1 parts by mass of dibutyl tin dilaurate (DBTL) as a catalyst, 0.02 parts by mass of p-methoxyphenol ("MQ" by Kawaguchi Chemical Industry Co., Ltd.) as a polymerization inhibitor, and 50.3 parts by mass of 4-acryloylmorpholine ("ACMO" by KJ Chemicals Corporation) as a reactive diluent were charged and heated up to 80°C with stirring, and 69.4 parts by mass of isophorone diisocyanate (by VENCOREX Corporation) was added dropwise thereto and reacted at 80°C for 2 hours to give an unsaturated carbonyl compound (A-2).

The unsaturated carbonyl compounds (A-1) and (A-2) produced in the above Production Examples are mixtures containing a polyfunctional unsaturated carbonyl compound (A1) and a monofunctional unsaturated carbonyl compound (A2).

[Production of Polymer (G22) Solution]

<Production Example of Solution of Polymer (G22-1)>

The reaction was performed under ordinary pressure in a nitrogen atmosphere. 42.86 parts by mass of methyl amyl ketone was charged in a reaction vessel equipped with a stirrer, a reflux condenser, a thermometer, a nitrogen introducing tube, and a dropping funnel, and heated to an internal temperature of 100°C under stirring. While retaining the temperature of methyl amyl ketone in the reaction vessel to 100 ± 5°C, a mixture containing 40.0 parts by mass of NK Ester AM-90G (methoxy polyethylene glycol acrylate, repetition number of polyethylene glycol: 9 in average, by Shin-Nakamura Chemical Co., Ltd.), 60.0 parts by mass of isobutyl acrylate, and 4.0 parts by mass of 2,2'-azobis(2-methylbutyronitrile) was added dropwise to the reaction vessel over 4 hours. Thereafter, the reaction mixture was stirred at the temperature range retaining for 2 hours, so as to provide a solution of a polymer (G22-1) having a solid content of 70.3% by mass, a viscosity of 109 mPa·s, and a weight average molecular weight (Mw) of 9,100.

[Evaluation Method for Polymer and Polymer Solution]

<Solid Content (% by mass) of Polymer Solution>

1.0 g ($X_1$) of the polymer solution was retained in a thermostat chamber retained under a condition of 1 atm and 108°C for 3 hours, so as to remove the volatile component to provide the non-volatile component. The amount ($X_2$ (g)) of the non-volatile component was measured, and the amount of the solid content (% by mass) contained in the polymer solution was calculated by the following expression.

$$\text{Solid content (\% by mass) of solution of polymer} = X_2/X_1 \times 100$$

<Viscosity of Polymer Solution>

The viscosity (unit: mPa·s) of the polymer solution at a liquid temperature of 25°C was measured with an E-type viscometer (TV-25, by Toki Sangyo Co., Ltd.).

<Average Molecular Weight of Polymer>

The weight average molecular weight (Mw) of the polymer was measured by gel permeation chromatography (GPC) under the following condition.

(GPC Condition)

Equipment: "HLC-8220GPC" (by Tosoh Corporation)
Columns: "TSKgel Super H2000" + "TSKgel Super H4000" (by Tosoh Corporation)
Eluent: tetrahydrofuran (THF)
Flow rate: 0.500 mL/min
Detector: RI
Column thermostat chamber temperature: 40°C
Standard substance: polystyrene

Preparation method of specimen: The polymer solution prepared was diluted by adding THF thereto, and then filtered with a membrane filter to provide a filtrate, which was designated as a specimen for the GPC measurement.

[Cover Film Forming Composition (X)/Antifouling Coating Composition (Y)]

Formulation Components

The formulation components used for the cover film forming composition (X) are shown in Table 2, and the formulation components used for the antifouling coating composition (Y) are shown in Table 1 and Table 2.

The kneaded product of the curable organopolysiloxane (B) and the inorganic filler (silica) (I) shown in Table 1 was obtained using the curable organopolysiloxane (B) and the inorganic filler (silica) (I) in the amounts shown in Table 1 and kneading them by a known method.

Table 1

| | | Compound name | Chemical formula, characteristics, manufacturer |
|---|---|---|---|
| (B) | Curable organopolysiloxane | silanol group-containing organopolysiloxane | $HO-[Si(CH_3)_2-O-]_n-H$ |
| | | | weight average molecular weight: 28,500, viscosity: 2,100 mPa s |
| | | oxime group-containing organopolysiloxane (*1) | $(MEKO)_2(CH2=CH-)SiO-[Si(CH_3)_2-O-]_n-Si(CH=CH_2)(MEKO)_2$ |
| | | | weight average molecular weight: 35,000, viscosity: 1,500 mPa·s |
| (I) | Silica | non-treated silica | Aerosil 200, by Nippon Aerosil Co., Ltd. |
| | | hydrophobic treated silica | Aerosil RX200, by Nippon Aerosil Co., Ltd. |
| Kneaded product of (B) and (I) (1) | | kneaded product of silanol group-containing organopolysiloxane and hydrophobic treated silica amount of component (L) per 100 parts by mass of component (B): 10 parts by mass, viscosity: 5,000 mPa·s | |
| Kneaded product of (B) and (I) (2) | | kneaded product of oxime group-containing organopolysiloxane and non-treated silica amount of component (L) per 100 parts by mass of component (B): 10 parts by mass, viscosity: 40 Pa·s | |

(continued)

| | Compound name | Chemical formula, characteristics, manufacturer |
|---|---|---|
| Kneaded product of (B) and (I) (3) | kneaded product of oxime group-containing organopolysiloxane and hydrophobic treated silica amount of component (L) per 100 parts by mass of component (B): 10 parts by mass, viscosity: 800 Pa·s | |
| *1: "MEKO" shows a methyl ethyl ketoxime group. | | |

Table 2

| | | Compound name | Chemical formula, characteristics, manufacturer |
|---|---|---|---|
| (A) | Unsaturated carbonyl compound | EO 15/triacrylate | " Sartomer SR9035" by Sartomer Japan, Ltd. Ethoxylated (15) trimethylolpropane triacrylate, average molecular weight 956, Tg -32°C |
| | | Acrylic acid | "98% Acrylic Acid" by Toagosei Co., Ltd. |
| | | HEAA | "HEAA" by KJ Chemicals Corporation 2-Hydroxyethylacrylamide |
| | | 4-HBA | "4-HBA" by Osaka Organic Chemical Industry Ltd. 4-Hydroxybutyl acrylate |
| | | ACMO | "ACMO" by KJ Chemicals Corporation 4-Acryloylmorpholine |
| | | DMAA | "DMAA" by KJ Chemicals Corporation N,N-dimethylacrylamide |
| | | AM-90G | "AM-90G" by Shin-Nakamura Chemical Co., Ltd. Methoxypolyethylene glycol (average repetition number 9) acrylate |
| (C) | Polymerization initiator | Photoinitiator 1 | "Irgacure 184D" by BASF Japan Ltd. 1-Hydroxycyclohexyl phenyl ketone |
| | | Photoinitiator 2 | "Irgacure TPO" by BASF Japan Ltd. Diphenyl(2,4,6-trimethylbenzoyl)phosphine oxide |
| (H) | Organic solvent | Xylene | - |
| | | Acetylacetone | - |
| (D) | Polymerization inhibitor | Hydroquinone | "Hydroquinone" by Mitsui Chemicals, Inc. 1,4-Benzenediol |
| (E) | An tifoaming agent | BYK-066N | "BYK-066" by BYK Corporation |
| (O) | Viscosity regulator | Fatty acid amide | "Disparlon A630-20" by Kusumoto Chemicals, Ltd. (solid content 20% by mass) |
| (F) | Silane-coupling agent | 3-(2-Aminoethylamino) propyltrimethoxysilane | "KBM-603" by Shin-Etsu Chemical Co., Ltd. |
| | | 3-Aminopropyltrimethoxysilane | "KBM-903" by Shin-Etsu Chemical Co., Ltd. |
| (G1) | Silicone oil | Phenyl-modified polydimethylsiloxane | "KF-50-1,000CS" by Shin-Etsu Chemical Co., Ltd. Phenyl modification degree = 5%, viscosity = 1000 mPa·s |
| (J) | Organosilicon crosslinking agent | Organosilane partial hydrolyzed condensate | "WACKER SILICATE TES 40 WN" by Asahi Kasei Wacker Silicone Corporation $H_5C_2O\text{-}[Si(OC_2H_5)_2\text{-}O\text{-}]_t\text{-}C_2H_5$ |

(continued)

| | | Compound name | Chemical formula, characteristics, manufacturer |
|---|---|---|---|
| (K) | Curing catalyst | Dibutyl tin dilaurate | "Gleck TL" by DIC Corporation |
| (L) | Coloring pigment | Red iron oxide | "Gekko BB" by Toda Kogyo Corporation |
| (M) | Organisms repellent | Copper pyrithione | "Copper Omadine Powder" by Arch UK Biocides Ltd. Formula: $Cu(-S-C_5H_4N-O-)_2$ |

<Production of Cover Film Forming Template>

A mixture liquid composed of 85 parts by mass of silanol group-containing organopolysiloxane, 5 parts by mass of hydrophobic silica, 5 parts by mass of organosilane partial hydrolyzed condensate, 1 part by mass of dibutyl tin dilaurate and 4 parts by mass of acetylacetone as mentioned above was applied to a PMMA panel ("LPV-90-0.05" by NTKJ Co., Ltd.) having a V-grooved surface structure, using a film applicator having a clearance of 1.1 mm, dried (cured) at room temperature (23°C) for 1 hour, and then dried (cured) at 50°C for 2 hours to give a cover film forming template film having a V-grooved riblet structure on the surface thereof.

Production Examples X-1 to X-11

<Preparation of Cover Film Forming Composition (X)>

The components shown in Table 3 below were mixed to prepare cover film forming coating compositions X-1 to X-11.

Table 3

| Cover Film Forming Composition Formulation (part by mass) | | | Production Example | | | | | | | | | | |
|---|---|---|---|---|---|---|---|---|---|---|---|---|---|
| | | | X-1 | X-2 | X-3 | X-4 | X-5 | X-6 | X-7 | X-8 | X-9 | X-10 | X-11 |
| (A) | (A1) | EO 15/triacrylate | | | 25.0 | 25.0 | 25.0 | 25.0 | 30.0 | 20.0 | | | |
| | (A1) and (A2) | (A-1) | 25.0 | | | | | | | | | | |
| | | (A-2) | | 25.0 | | | | | 10.0 | | | | |
| | (A2) | Acrylic acid | | | | 75.0 | | | | | 100.0 | | |
| | | HEAA | | | | | 75.0 | | | | | 100.0 | |
| | | 4-HBA | | | | | | 75.0 | | | | | |
| | | ACMO | 75.0 | 75.0 | 75.0 | | | | 60.0 | 50.0 | | | |
| | | DMAA | | | | | | | | | | | 100.0 |
| | | AM-90G | | | | | | | | 30.0 | | | |
| (C) | | Photoinitiator 1 | 1.0 | 1.0 | 1.0 | 1.0 | 1.0 | 1.0 | 1.0 | 1.0 | 1.0 | 1.0 | 1.0 |
| | | Photoinitiator 2 | 1.0 | 1.0 | 1.0 | 1.0 | 1.0 | 1.0 | 1.0 | 1.0 | 1.0 | 1.0 | 1.0 |
| (H) | | Xylene | 8.0 | 8.0 | 8.0 | 8.0 | 8.0 | 8.0 | 8.0 | 8.0 | 8.0 | 8.0 | 8.0 |
| (D) | | Hydroquinone | 0.02 | 0.02 | 0.02 | 0.02 | 0.02 | 0.02 | 0.02 | 0.02 | 0.02 | 0.02 | 0.02 |
| (E) | | BYK-066N | 0.02 | 0.02 | 0.02 | 0.02 | 0.02 | 0.02 | 0.02 | 0.02 | 0.02 | 0.02 | 0.02 |
| (O) | | Fatty acid amide | 5.0 | 5.0 | 5.0 | 5.0 | 5.0 | 5.0 | 5.0 | 5.0 | 5.0 | 5.0 | 5.0 |
| Total (part by mass) | | | 115.0 | 115.0 | 115.0 | 115.0 | 115.0 | 115.0 | 115.0 | 115.0 | 115.0 | 115.0 | 115.0 |

<Production of Cover Film (x)>

Production Examples x-1 to x-8

The cover film forming composition of X-1 to X-8 was applied to release paper using a film applicator having a clearance of 0.2 mm, then the cover film forming template film was put thereon in such a manner that the riblet structure-having surface thereof could be in contact with the liquid film, and from the side opposite to the side of the surface having the riblet structure of the template film, this was irradiated with UV under the condition of 23°C and thus cured, and thereafter the cover film forming template film and the release paper were removed to give cover films x-1 to x-8 each having a riblet structure on the surface thereof. The cover films x-1 to x-8 are single-layered films formed of the cover film forming compositions X-1 to X-8, respectively.

Production Examples x-9 to x-11

The cover film forming composition of X-9 to X-11 was applied to a PVA film ("Poval Film VF-HN#4000", by Kuraray Corporation), using a film applicator having a clearance of 0.2 mm, then the cover film forming template film was put thereon in such a manner that the riblet structure-having surface thereof could be in contact with the liquid film, and from the side opposite to the side of the surface having the riblet structure of the template film, this was irradiated with UV under the condition of 23°C and thus cured, and thereafter the cover film forming template film was removed to give cover films x-9 to x-11 each having a riblet structure on the surface thereof. The cover films x-9 to x-11 are double-layered films reinforced by the PVA film as a substrate sheet for cover film.

Production Examples x-12 to x-14

The cover film forming composition of X-9 to X-11 was applied to a PET film ("Lumirror T60", by Toray Industries, Inc., thickness 75p), using a film applicator having a clearance of 0.2 mm, then the cover film forming template film was put thereon in such a manner that the riblet structure-having surface thereof could be in contact with the liquid film, and from the side opposite to the side of the surface having the riblet structure of the template film, this was irradiated with UV under the condition of 23°C and thus cured, and thereafter the cover film forming template film was removed to give cover films x-12 to x-14 each having a riblet structure on the surface thereof. The cover films x-12 to x-14 are double-layered films reinforced by the PET film of a substrate sheet for cover film.

Production Examples Y-1 and Y-2

<Production of Antifouling Coating Composition (Y)>

According to the formulation (part by mass) indicated in Table 4, the components were mixed and stirred to prepare a multi-component antifouling coating composition (Production Example Y-1) composed of plural components, and a one-component antifouling coating composition (Production Example Y-2) composed of a base component alone.

In the case where the multi-component antifouling coating composition is applied, the components are fully stirred and mixed using a disperser to give a uniform dispersion before use.

Table 4

| Formulation of antifouling coating composition (part by mass) | | | Production Example Y-1 | Production Example Y-2 |
|---|---|---|---|---|
| Base component | (B) | Silanol group-containing organopolysiloxane | 34.0 | |
| | (B) and (I) | Silanol group-containing organopolysiloxane/hydrophobic treated silica kneaded mixture (1) | 23.0 | |
| | | Oxime silyl group-containing organopolysiloxane/non-treated silica kneaded mixture (2) | | 40.0 |
| | | Oxime silyl group-containing organopolysiloxane/non-treated silica kneaded mixture (3) | | 15.0 |
| | (F) | 3-(2-Aminoethylamino)propyltrimethoxysilane | | 0.1 |
| | (G1) | Phenyl-modified polydimethylsiloxane | | 10.0 |
| | (G2) | Polymer (G22-1) (solid content 70.3% by mass) | 9.0 | 10.0 |
| | (H) | Xylene | 7.0 | 16.9 |
| | (J) | Organosilane partial hydrolyzed condensate | | 3.0 |
| | (L) | Red iron oxide | 5.0 | 5.0 |
| | (M) | Copper Pyrithione | 5.0 | 5.0 |
| | Subtotal of base component (part by mass) | | 83.0 | 100.0 |

(continued)

Table 4 (continued)

| Formulation of antifouling coating composition (part by mass) | | | Production Example Y-1 | Production Example Y-2 |
|---|---|---|---|---|
| Curing agent | (G1) | Phenyl-modified polydimethylsiloxane | 6.0 | |
| | (H) | Acetylacetone | 5.4 | |
| | | Xylene | 1.0 | |
| | (J) | Organosilane partial hydrolyzed condensate | 3.0 | |
| | (K) | Dibutyl tin dilaurate | 0.6 | |
| | Subtotal of curing agent (part by mass) | | 16.0 | |
| Additive | (F) | 3-(2-Aminoethylamino)propyltrimethoxysilane | 0.08 | |
| | (H) | Xylene | 0.92 | |
| | Subtotal of additive (part by mass) | | 1.0 | |
| Total (part by mass) | | | 100.0 | 100.0 |

Example 1

<Production of Antifouling Coating Film with Cover film/Antifouling Tape>

The antifouling coating composition Y-1 was applied to the riblet structure-having surface of the cover film x-1

produced as above, using a film applicator having a clearance of 0.5 mm, and dried (cured) at room temperature (23°C) for 12 hours to give an antifouling coating film with a cover film.

Next, the kneaded mixture (2) of the components (B) and (L) was applied to the surface of the antifouling coating film opposite to the surface thereof in contact with the cover film, using a film applicator having a clearance of 0.2 mm, and dried (cured) at room temperature (23°C) for 3 hours to form an intermediate layer.

Further, a mixture prepared by mixing 100 parts by mass of an addition-curing silicone pressure-sensitive adhesive (vinyl group-containing silicone, "Dow Corning Toray SD 4592 PSA" by Toray Dow Corning Corporation), 1.0 part by mass of a pressure-sensitive adhesive crosslinking agent (Si-H compound, "BY24-742" by Toray Dow Corning Corporation), 0.9 parts by mass of a platinum catalyst ("NC-25 CATALYST" by Toray Dow Corning Corporation) and 50 parts by mass of toluene was applied to the intermediate layer, using a film applicator having a clearance of 0.2 mm, and dried (cured) at 100°C for 5 minutes to form a pressure-sensitive adhesive layer, thereby producing an antifouling tape of the present invention. The cover film (x) and the antifouling coating composition (Y) used here are shown in Table 5.

Examples 2 to 16

<Production of Antifouling Coating Film with Cover film/Antifouling Tape>

Antifouling tapes of Examples 2 to 16 were produced in the same manner as in Example 1, except that the cover film (x) and the antifouling coating composition (Y) to be used were changed to those shown in Table 5 and Table 6.

Comparative Example 1

<Production of Antifouling Coating Film with Cover film/Antifouling Tape>

An antifouling tape was produced in the same manner as in Example 1, except that the cover film x-1 used in Example 1 was changed to a cover film x-r (PVA film, "Poval Film VF-HH#4000" by Kuraray Corporation), the antifouling coating composition (Y) to be used was changed to one shown in Table 5 and Table 6, and the antifouling coating film was formed on the flat surface of the cover film x-4.

Table 5

| | | Example | | | | | | | | | Comparative Example |
|---|---|---|---|---|---|---|---|---|---|---|---|
| | | 1 | 2 | 3 | 4 | 5 | 6 | 7 | 8 | 9 | 1 |
| Cover film (x) | | x-1 | x-2 | x-3 | x-4 | x-4 | x-5 | x-6 | x-7 | x-8 | x-r |
| Antifouling coating composition (Y) | | Y-1 | Y-2 | Y-2 | Y-1 | Y-2 | Y-2 | Y-2 | Y-2 | Y-1 | Y-2 |
| Evaluation Results | Interlayer adhesiveness | 3 | 3 | 3 | 3 | 3 | 3 | 3 | 3 | 2 | 1 |
| | Bending resistance | 2 | 2 | 3 | 2 | 2 | 3 | 2 | 3 | 3 | - |
| | Removability in contact with water | 2 | 2 | 2 | 2 | 2 | 2 | 2 | 2 | 2 | - |
| | Antifouling property | 5 | 4 | 4 | 5 | 4 | 4 | 4 | 4 | 5 | 4 |

Table 6

| | Example | | | | | | | Comparative Example |
|---|---|---|---|---|---|---|---|---|
| | 10 | 11 | 12 | 13 | 14 | 15 | 16 | 1 |
| Cover film (x) | x-9 | x-9 | x-10 | x-11 | x-12 | x-13 | x-14 | x-r |
| Antifouling coating composition (Y) | Y-1 | Y-2 | Y-2 | Y-2 | Y-1 | Y-1 | Y-1 | Y-2 |

(continued)

| | | Example | | | | | | | Comparative Example |
|---|---|---|---|---|---|---|---|---|---|
| | | 10 | 11 | 12 | 13 | 14 | 15 | 16 | 1 |
| Evaluation Results | Interlayer adhesiveness | 3 | 3 | 2 | 2 | 3 | 2 | 2 | 1 |
| | Bending resistance | 3 | 3 | 3 | 3 | 3 | 3 | 3 | - |
| | Removability in contact with water | 3 | 3 | 3 | 2 | 2 | 2 | 2 | - |
| | Antifouling property | 5 | 4 | 4 | 4 | 5 | 5 | 5 | 4 |

<Interlayer Adhesiveness>

The pressure-sensitive adhesive layer of each antifouling tape produced in Examples and Comparative Examples was stuck to release paper, and then the antifouling tape was peeled from its edge and checked for occurrence of interlayer peeling between the cover film (x) and the antifouling coating film (y) to evaluate the interlayer adhesiveness according to the following criteria. The evaluation results are shown in Table 5 and Table 6.

(Evaluation of Interlayer Adhesiveness>

3: No interlayer peeling occurred between the cover film (x) and the antifouling coating film (y).
2: Interlayer peeling of less than 3 mm occurred from the edge.
1: Interlayer peeling of 3 mm or more occurred from the edge.

In the case where the antifouling tape is stuck to a target surface after the release paper that is for protecting the pressure-sensitive adhesive surface of the antifouling tape until before use is peeled, but when the cover film is peeled prior to the release paper, the cover film could no more play a role that is needed in sticking. Specifically, a high evaluation of interlayer adhesiveness means that the antifouling tape and the antifouling coating film with a cover film have excellent working operability in a process of sticking them.

<Bending Resistance>

Using a test machine described in JIS-K5600-5-1:1999 "Bending Resistance (cylindrical mandrel method)", a cylindrical mandrel bending tester (by Allgood Corporation), the antifouling tape produced in Examples and Comparative Examples was evaluated in point of bending resistance according to following the criteria based on the diameter of the mandrel. The evaluation results are shown in Table 5 and Table 6.

(Evaluation of Bending Resistance>

3: Neither cracking nor peeling occurred even at a diameter of 2 mm.
2: Cracking or peeling occurred at a diameter of 2 to 4 mm, but neither cracking nor peeling occurred at a diameter of 5 mm or more.
1: Cracking or peeling occurred at a diameter of 5 mm or more.

This evaluation is to indicate whether or not the antifouling tape or the antifouling coating film with a cover film has bending resistance needed in production or in working in a transportation or sticking process.

<Removability in contact with water>

The antifouling tape with a cover film produced in Examples and Comparative Examples was cut into a 1 cm square, and the pressure-sensitive adhesive surface thereof was stuck to a polyvinyl chloride sheet. Subsequently, the

resultant samples were immersed in tap water at 23°C, and based on the immersion time in which the samples reached a state of cover film having peeled from the antifouling coating film or a state removable by rubbing with an extremely weak force (removable state), the samples were evaluated according to the following criteria. The evaluation results are shown in Table 5 and Table 6.

(Evaluation of Removability in contact with water)

3: Reached a removable state in an immersion time of 10 seconds.
2: Did not reach a removable state in an immersion time of 10 seconds, but reached a removable state in 10 minutes.
1: Did not reach a removable state even after an immersion time of 10 minutes.

<Evaluation of Antifouling Property>

The pressure-sensitive adhesive surface of the antifouling tape produced in Examples and Comparative Examples was stuck to a polyvinyl chloride sheet, and immersed in tap water at 23°C for 10 hours to remove the cover film, thereby providing an antifouling coating film test sheet.

Thus prepared, the antifouling coating film test sheet was immersed in Hiroshima Bay, and after 6 months, the area occupied by marine organisms was evaluated according to the following criteria. The evaluation results are shown in Table 5 and Table 6.

(Evaluation of Antifouling Property)

5: The area occupied by marine organisms was less than 10% of the whole area.
4: Above mentioned area was 10% or more and less than 30% of the whole area.
3: Above mentioned area was 30% or more and less than 50% of the whole area.
2: Above mentioned area was 50% or more and less than 80% of the whole area.
1: Above mentioned area was 80% or more of the whole area.

These results indicate that the antifouling coating film with a cover film of the present invention has good adhesiveness between the cover film (x) and the antifouling coating film (y), and has bending resistance, and further that the cover film has excellent removability in contact with water, and the antifouling coating film has excellent antifouling property. The antifouling coating film of Comparative Example 1 was poor in adhesiveness to the cover film, and therefore could not be evaluated for bending resistance and removability in contact with water.

## Claims

**1.** An antifouling coating film with a cover film that comprises a cover film (x) formed from a cover film forming composition (X) and an antifouling coating film (y) formed from an antifouling coating composition (Y), wherein:

the cover film forming composition (X) contains an unsaturated carbonyl compound (A) having one or more $\alpha,\beta$-unsaturated carbonyl groups in one molecule,
the antifouling coating composition (Y) contains a curable organopolysiloxane (B), and
the cover film (x) is provided on one surface of the antifouling coating film (y).

**2.** The antifouling coating film with a cover film according to claim 1, wherein the unsaturated carbonyl compound (A) contains at least one compound selected from the group consisting of a polyfunctional unsaturated carbonyl compound (A1) and a monofunctional unsaturated carbonyl compound (A2).

**3.** The antifouling coating film with a cover film according to claim 1 or 2, wherein the unsaturated carbonyl compound (A) has at least one selected from the group consisting of a hydroxy group, a carboxy group, an amino group, an amide group, and an alkyleneoxy group.

**4.** The antifouling coating film with a cover film according to any one of claims 1 to 3, wherein the antifouling coating

composition (Y) further contains a silane coupling agent (F).

5. The antifouling coating film with a cover film according to any one of claims 1 to 4, wherein the antifouling coating composition (Y) further contains an aquatic organisms slip agent (G).

6. The antifouling coating film with a cover film according to claim 5, wherein the aquatic organisms slip agent (G) contains one or more selected from the group consisting of a silicone oil (G1) and a hydrophilic group-containing polymer (G2).

7. The antifouling coating film with a cover film according to any one of claims 1 to 6, wherein the cover film (x) has a substrate sheet for cover film on the surface opposite to the surface thereof that is in contact with the antifouling coating film (y).

8. The antifouling coating film with a cover film according to any one of claims 1 to 7, wherein the surface of the cover film (x) and the antifouling coating film that are in contact with each other has a riblet surface structure.

9. A method for producing the antifouling coating film with a cover film of any one of claims 1 to 8, comprising a step of applying the antifouling coating composition (Y) onto the cover film (x).

10. An antifouling tape having the antifouling coating film with a cover film of any one of claims 1 to 8 and a pressure-sensitive adhesive layer (v), wherein:
the pressure-sensitive adhesive layer (v) is on the surface opposite to the surface of the antifouling coating film (y) that is in contact with the cover film (x), optionally via an intermediate layer (w).

11. A method for producing a water-contacting structure with an antifouling coating film, comprising a step 1 of arranging and fixing the antifouling coating film with a cover film of any one of claims 1 to 8 or the antifouling tape of claim 10 on at least a part of a surface of a water-contacting structure in such a manner that the cover film (x) can be on the water-contacting surface side and that the antifouling coating film (y) can be on the water-contacting structure side, and a step 2 of removing the cover film (x) from the antifouling coating film (y) by contact with water.

## INTERNATIONAL SEARCH REPORT

International application No.
PCT/JP2019/045260

A. CLASSIFICATION OF SUBJECT MATTER
B32B 27/00(2006.01)i; B05D 5/00(2006.01)i; B05D 7/04(2006.01)i; B05D 7/24(2006.01)i; C09D 5/16(2006.01)i; C09D 7/63(2018.01)i; C09D 7/65(2018.01)i; C09D 183/04(2006.01)i; C09J 7/29(2018.01)i; C09J 7/38(2018.01)i
FI: B32B27/00 101; B05D5/00 H; B05D7/04; B05D7/24 302Y; B05D7/24 303A; B05D7/24 303E; C09D5/16; C09D7/63; C09D7/65; C09D183/04; C09J7/29; C09J7/38
According to International Patent Classification (IPC) or to both national classification and IPC

B. FIELDS SEARCHED
Minimum documentation searched (classification system followed by classification symbols)
B32B27/00; B05D5/00; B05D7/04; B05D7/24; C09D5/16; C09D7/63; C09D7/65; C09D183/04; C09J7/29; C09J7/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2016-108415 A (NITTO DENKO CORP.) 20.06.2016 (2016-06-20) claims, paragraphs [0026], [0145]-[0153] | 1-2, 5-7, 9-11<br>4, 8<br>3 |
| Y | JP 2013-227476 A (NITTO DENKO CORP.) 07.11.2013 (2013-11-07) claims, paragraphs [0020]-[0025] | 4 |
| Y | JP 1-222908 A (INTERNATIONAL PAINT PUBLIC LIMITED COMPANY) 06.09.1989 (1989-09-06) claims | 8 |
| Y | JP 2018-27510 A (JAPAN AEROSPACE EXPLORATION AGENCY) 22.02.2018 (2018-02-22) claims | 8 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 January 2020 (14.01.2020) | 28 January 2020 (28.01.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/045260

| Patent Documents referred in the Report | Publication Date | Patent Family | Publication Date |
|---|---|---|---|
| JP 2016-108415 A | 20 Jun. 2016 | (Family: none) | |
| JP 2013-227476 A | 07 Nov. 2013 | (Family: none) | |
| JP 1-222908 A | 06 Sep. 1989 | US 4947785 A claims<br>GB 8800297 A<br>EP 323906 A2 | |
| JP 2018-27510 A | 22 Feb. 2018 | CN 109890516 A claims | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018510084 A
- JP 2016124994 A
- JP 1222908 A
- JP 2018027510 A
- WO 201688630 A
- JP 2016203039 A
- JP 2004182908 A
- WO 2017209029 A
- JP 2011530443 A
- JP 2012508128 A
- JP 2015224334 A
- JP 2013194124 A
- JP 2013155232 A
- JP 2013155233 A
- WO 2016193326 A